# FASCICULE DE BREVET EUROPEEN

(11) **EP 4 057 169 B1**
(45) Date de publication et mention de la délivrance du brevet: **28.06.2023**
(21) Numéro de dépôt: 22157120.1
(22) Date de dépôt: 16.02.2022
(51) Int. Cl.: G06F 21/54

(54) **PROCÉDÉ D'EXÉCUTION D'UN CODE BINAIRE D'UN PROGRAMME D'ORDINATEUR PAR UN MICROPROCESSEUR**
VERFAHREN ZUR AUSFÜHRUNG EINES BINÄREN CODES EINES COMPUTERPROGRAMMS DURCH EINEN MIKROPROZESSOR
METHOD FOR EXECUTING A BINARY CODE OF A COMPUTER PROGRAM BY A MICROPROCESSOR

(30) Priorité: 09.03.2021 FR 2102265
(43) Date de publication de la demande: 14.09.2022
(73) Titulaire: Commissariat à l'énergie atomique et aux énergies alternatives, 75015 Paris (FR)
(72) Inventeur: SAVRY, Olivier, 38054 Grenoble Cedex 09 (FR); HISCOCK, Thomas, 38054 Grenoble Cedex 09 (FR)
(74) Mandataire: INNOV-GROUP

(56) Documents cités:
- EP-A1- 3 761 199
- SOURAV DAS ET AL: "SHAKTI-MS: a RISC-V processor for memory safety in C", LANGUAGES, COMPILERS, AND TOOLS FOR EMBEDDED SYSTEMS, ACM, 2 PENN PLAZA, SUITE 701NEW YORKNY10121-0701USA, 23 juin 2019 (2019-06-23), pages 19-32, XP058438690, DOI: 10.1145/3316482.3326356 ISBN: 978-1-4503-6724-0

## Description

L'invention concerne un procédé d'exécution d'un code binaire d'un programme d'ordinateur par un microprocesseur. L'invention concerne également :
- un code binaire d'un programme d'ordinateur, un support d'enregistrement d'informations et un microprocesseur pour la mise en oeuvre de ce procédé d'exécution, et
- un compilateur pour générer le code binaire.

Pour obtenir des informations sur un code binaire ou provoquer un fonctionnement inattendu du code binaire, de nombreuses attaques sont possibles.

Certaines de ces attaques sont basées sur un usage erroné d'un pointeur de donnée. On rappelle ici qu'un pointeur de donnée est une donnée qui contient l'adresse de la donnée à traiter et non pas directement la valeur de la donnée traitée.

L'usage de tels pointeurs de données est fréquent dans un code exécutable. Par exemple, un tel pointeur est utilisé pour pointer vers la première cellule d'un tableau de plusieurs cellules. Ensuite, pour traiter la cellule suivante de ce tableau, il suffit simplement d'incrémenter l'adresse contenue dans le pointeur d'un pas prédéterminé.

Lors de la conception du code source, le pointeur est prévu pour manipuler et traiter un groupe de données d'une taille prédéterminée. Toutefois, lors de l'exécution du code binaire correspondant, il est parfois possible de s'arranger pour que ce pointeur pointe sur une donnée située en dehors de ce groupe de données. Par exemple, un tel usage erroné de ce pointeur est provoqué en saisissant, dans un champ de saisie, une donnée dont la taille est bien plus grande que celle prévue initialement par les développeurs du programme. Grâce à cela, il est possible d'écrire des données dans des plages d'adresses où cela ne devrait pas être fait. Autrement dit, le pointeur est utilisé pour pointer vers des adresses invalides. Un exemple de ce premier type d'attaque est connu sous le terme de « attaque par dépassement de tampon» ou « stack overflow attack », lorsque cette attaque vise la pile utilisée par le programme d'ordinateur. Lorsque le pointeur est utilisé pour écrire des données avant la plage d'adresses prévue à cet effet dans la pile, l'attaque est également connue sous le terme de « stack underflow attack ».

Ce premier type d'attaque peut être mis en oeuvre de façon assez similaire pour écrire des données à des adresses invalides dans d'autres parties de la mémoire que la pile, comme par exemple, dans une partie connue sous le terme de « tas » (« heap » en anglais).

Ces premiers types d'attaques ont en commun d'utiliser un pointeur valide pour pointer sur des adresses invalides. On dit alors qu'elles concernent ce qui touche au domaine de la « sécurité spatiale » (« spatial safety » en anglais).

Il existe aussi des usages erronés des pointeurs qui touchent au domaine de la sécurité temporelle (« temporal safety » en anglais). Dans ce cas, un pointeur invalide est utilisé pour pointer sur une adresse valide. Un pointeur invalide est un pointeur qui a été utilisé de façon valide pour traiter des données dans un contexte limité, et qui est ensuite utilisé à nouveau en dehors de ce contexte limité. Cela peut se produire si, par exemple, ce pointeur n'a pas correctement été réinitialisé ou initialisé. Ce type de pointeur invalide est connu sous le terme anglais de « dangling pointer ».

Certaines attaques repèrent donc ces pointeurs invalides, puis les utilisent pour lire ou écrire des données à des instants où ils ne devraient pas être utilisés pour cela. À titre d'illustration de ce second type d'attaque, on peut citer l'attaque connue sous l'expression anglaise de « use-after-free ».

Plusieurs solutions ont déjà été proposées pour rendre plus difficile un usage erroné d'un pointeur.

En particulier, une solution intéressante est divulguée dans la demande EP3761199A1. Cette solution consiste à utiliser des pointeurs enrichis. Dans ce cas, chaque pointeur Pⱼ comporte en plus de l'adresse @ⱼ de la donnée Dⱼ vers laquelle il pointe, une plage de bits contenant un identifiant IPⱼ qui distingue ce pointeur Pⱼ d'autres pointeurs utilisés lors de la même exécution du code binaire. De plus, la donnée Dⱼ destinée à être lue à l'aide de ce pointeur Pⱼ enrichie est associée à l'identifiant IPⱼ de ce pointeur. Ensuite, à chaque fois qu'un pointeur Pₓ est utilisé pour lire la donnée Dⱼ, un mécanisme de détection est mis en oeuvre pour détecter qu'il s'agit bien du pointeur Pⱼ. Pour cela, ce mécanisme vérifie que l'identifiant IPₓ contenu dans le pointeur Pₓ correspond bien à l'identifiant IPⱼ associé à la donnée Dⱼ. Typiquement, il n'y a correspondance entre les identifiants IPₓ et IPⱼ que si l'identifiant IPₓ est égal à l'identifiant IPⱼ. Dans le cas contraire, il n'y a pas correspondance et une erreur est signalée. Ce procédé permet de détecter pratiquement tous les usages erronées d'un pointeur et en particulier aussi bien les attaques qui touchent au domaine spatiale que celles qui touchent au domaine temporelle.

Toutefois, les inventeurs ont découvert un usage erroné de pointeurs qui ne peut pas être détecté par le procédé de la demande EP3761199A1. Cet usage erroné exploite le fait que pour manipuler une structure Sⱼ de données comportant plusieurs champs, un seul pointeur PSⱼ pointant directement vers l'adresse @Sⱼ où débute cette structure Sⱼ, est utilisé. Ensuite, l'adresse d'un champ C_{j,k} à lire de la structure Sⱼ est déduite à partir de l'adresse @Sⱼ contenue dans ce pointeur PSⱼ et de la position du champ C_{j,k} par rapport à l'adresse @Sⱼ. Habituellement, seul le pointeur PSⱼ est défini dans le code binaire car il serait très laborieux de définir dans le code binaire, pour chaque champ de la structure Sⱼ, un pointeur qui pointe directement vers le début de ce champ. En effet, par exemple, il est beaucoup plus simple de passer en argument d'une fonction qui traite un ou plusieurs champs de la structure Sⱼ, le seul pointeur PSⱼ plutôt que de passer en argument un pointeur pour chaque champ de la structure Sⱼ à traiter.

Dans ce contexte, les inventeurs ont remarqué qu'en saisissant, pour un champ de la structure Sⱼ, une valeur bien plus grande que celle prévue initialement par les développeurs du programme, alors il était possible de faire déborder la valeur de ce champ sur les champs voisins de la structures Sⱼ sans que cela puisse être détecté par le procédé de la demande EP3761199A1. Cela provient du fait que le même pointeur Pⱼ est utilisé pour lire et écrire chaque champs de la structure Sⱼ.

L'invention vise à améliorer le procédé de la demande EP3761199A1 et, en particulier, à pouvoir détecter le débordement de la valeur d'un champ d'une structure de données sur un champ voisin de cette structure de données.

De l'état de la technique est également connu de l'article suivant : SOURAV DAS et AL : "SHAKTI-MS : a RISC-V processor for memory saferty in C", Languages, Compilers, and Tools for Embedded Systems, ACM, 23/06/2019, pages 19-32.

L'invention a donc pour objet un tel procédé d'exécution d'un code binaire d'un programme d'ordinateur par un microprocesseur conforme à la revendication 1.

L'invention a également pour objet un code binaire comportant des instructions pour exécuter les étapes du procédé ci-dessus d'exécution, lorsque ces instructions sont exécutées par un microprocesseur.

L'invention a également pour objet un support d'enregistrement d'informations comportant le code binaire ci-dessus.

L'invention a également pour objet un microprocesseur pour la mise en oeuvre du procédé ci-dessus.

Enfin, l'invention a également pour objet un compilateur apte à transformer automatiquement un code source d'un programme d'ordinateur en un code binaire de ce programme d'ordinateur, ce code source définissant une structure de données comportant plusieurs champs accessibles indépendamment les uns des autres dont au moins un champ particulier à lire à l'aide d'un pointeur et le code binaire est le code binaire ci-dessus comportant des instructions pour exécuter les étapes du procédé ci-dessus d'exécution.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'un programme d'ordinateur,
- la figure 2 est une illustration schématique de la structure d'un pointeur enrichi utilisé lors de l'exécution du code binaire par l'appareil de la figure 1,
- la figure 3 est une illustration schématique de la structure d'une ligne de donnée utilisée lors de l'exécution du code binaire par l'appareil de la figure 1,
- les figures 4 et 5 sont des organigrammes, respectivement, d'un premier et d'un second modes de réalisation d'un procédé d'exécution du code binaire par l'appareil de la figure 1,
- la figure 6 est une illustration schématique d'un compilateur apte à générer le code binaire exécuté par l'appareil de la figure 1.

### CHAPITRE I : CONVENTIONS, NOTATIONS ET DEFINITIONS

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Pour être exécuté par un microprocesseur, le code binaire est enregistré dans des lignes d'une mémoire principale. Typiquement, le code binaire comporte plusieurs centaines ou milliers de lignes. Chacune de ces lignes est appelée "ligne de code". Chaque ligne de code est enregistrée à une adresse qui lui est propre dans la mémoire principale. Chaque ligne de code contient une seule instruction ou à une seule donnée. Par la suite, lorsque le code contenu dans la ligne de code correspond à une instruction, la ligne de code est appelée "ligne d'instruction". Lorsque le code contenu dans la ligne de code correspond une donnée, la ligne de code est appelée "ligne de donnée". Le terme "code" est quant à lui utilisé pour désigner aussi bien une instruction qu'une donnée et le terme "ligne de code" est utilisé pour désigner aussi bien une ligne de donnée qu'une ligne d'instruction.

L'espace d'adressage du programme est l'ensemble des adresses des lignes de code que le programme peut lire ou écrire lorsqu'il est exécuté. Lorsqu'il existe un mécanisme de mémoire virtuelle, l'espace d'adressage du programme est généralement un large plage continue d'adresses, dites "virtuelles", possibles pour les lignes de code à lire ou à écrire.

Une "structure de données" est un ensemble de plusieurs champs regroupés à l'intérieur d'une plage continue d'adresses de l'espace d'adressage du programme. Cette plage contient uniquement des champs qui appartiennent à cette structure de données. A l'intérieur de la structure de données, les différents champs sont classés les uns par rapport aux autres dans un ordre prédéterminé. A l'intérieur d'une structure de données, les différents champs de cette structure de données sont enregistrés les uns après les autres dans un ordre prédéterminé lors de la définition de la structure de données. Les différents champs d'une structure de données sont accédés en utilisant pour cela un pointeur qui pointe vers l'adresse à laquelle débute cette structure de données et la position du champ à accéder par rapport au début de cette structure de données. Un exemple classique de structure de données est un tableau comportant plusieurs cellules. Dans cet exemple, chaque cellule correspond à un champ de la structure de données.

Un "champ" d'une structure de données est soit une donnée soit une structure de données. Lorsque le champ est lui-même une structure de données, alors cette structure de données fille est imbriquée à l'intérieur d'une structure de données parente. Par la suite, pour distinguer les différentes niveaux de structures de données imbriquées les unes à l'intérieur des autres, la structure de données racine, c'est-à-dire celle qui n'a pas de structure de données parentes, est dite de rang 0. La structure de données fille imbriquée à l'intérieur de la structure de données parente, est dite de rang 1. Si la structure de données de rang 1 comporte elle aussi une structure de données fille, alors cette structure de données fille est dite de rang 2 et ainsi de suite.

Dans ce texte, un pointeur qui pointe directement vers le début d'une structure de données est appelé "pointeur de structure de données". Un tel pointeur de structure de données comporte notamment l'adresse à laquelle débute la structure de données pointée dans l'espace d'adressage du programme.

Un "pointeur de champ" est un pointeur qui pointe directement vers le début d'un champ d'une structure de données.

Sauf indication contraire, le terme "pointeur" seul désigne tout type de pointeur et donc aussi bien un pointeur de structure qu'un pointeur de champ.

Un champ "voisin" d'un champ particulier d'une structure de données désigne le champ de cette même structure de données qui précède ou suit immédiatement ce champ particulier.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

### CHAPITRE II : ARCHITECTURE DE L'APPAREIL

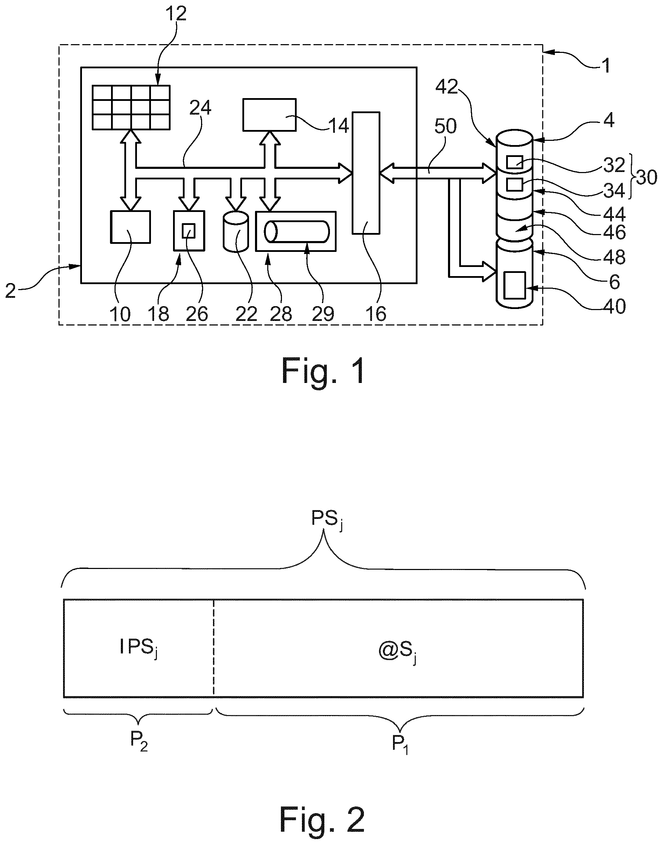

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions et des données d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine est adressable individuellement et peut être transféré en un seul cycle d'horloge depuis la mémoire 4 jusque dans un registre du microprocesseur par l'intermédiaire d'un bus de données. A cet effet, la taille N_{MM} d'un mot-machine est égale au nombre maximum de bits qui peuvent être transférés simultanément sur ce bus de données. Ici, la taille N_{MM} est strictement supérieure Nᵢₙₛₜ bits, où Nᵢₙₛₜ bits est le nombre de bits des instructions du jeu d'instructions du microprocesseur 2. Typiquement, Nᵢₙₛₜ est un entier supérieure ou égale à 8, 16, 32 ou 64. Dans cet exemple, Nᵢₙₛₜ est égal à 32 et la taille N_{MM} est égale à 128 bits.

La position de chaque mot machine dans la mémoire 4 est repérée par une adresse. Pour recevoir cette adresse, la mémoire 4 est reliée au microprocesseur 2 par un bus d'adresses. La taille N_{@} de l'adresse, en nombre de bits, détermine le nombre maximum de mot-machines qui peuvent être adressés individuellement dans la mémoire 4. Typiquement, la taille N_{@} est supérieure ou égale à 8, 16, 32 ou 64 bits. Par exemple, dans ce mode de réalisation, la taille N_{@} est égale à 64 bits.

Classiquement, la mémoire 4 est divisée en plusieurs parties. Par exemple, ici, la mémoire 4 comporte notamment les parties suivantes :
- une première partie 42 contenant les instructions à exécuter,
- une deuxième partie 44 contenant des données à traiter,
- une troisième partie 46 utilisée pour sauvegarder le contexte d'exécution d'une fonction lorsqu'elle appelle une autre fonction appelée "routine", et
- une quatrième partie 48 utilisée pour allouer dynamiquement de la mémoire au programme en cours d'exécution afin d'y enregistrer des données.
La partie 42 est connue sous le terme de "segment de code" ("code segment" en anglais). La partie 44 contient typiquement les variables statiques et globales du programme exécuté. La partie 46 est connue sous le terme de "pile d'exécution" ("call stack" en anglais). Par conséquent, par la suite, la partie 46 est également appelée "pile 46". Enfin la partie 48 est connue sous le terme de "tas" ("heap" en anglais). Ainsi, par la suite, la partie 48 est également appelée "tas 48".

Le code binaire 30 comporte notamment le code machine 32 du programme et un bloc 34 de données nécessaires à l'exécution du code binaire 30. Le code machine 32 et le bloc 34 sont enregistrés dans, respectivement, les parties 42 et 44.

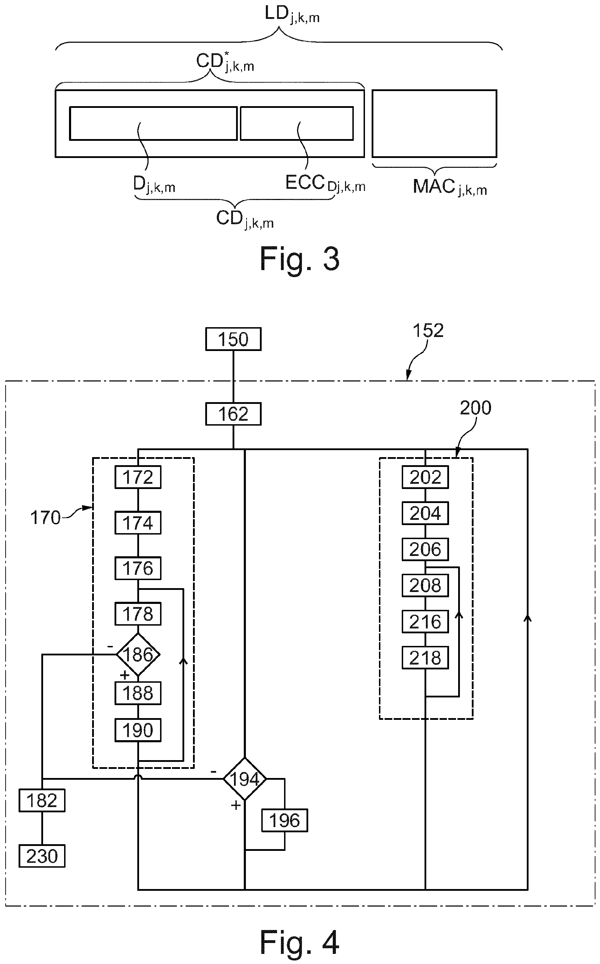

Ici, chaque ligne de code du code binaire correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. La structure d'une ligne de donnée est décrite en détail en référence à la figure 3.

L'exécution du code binaire 30 débute par le chargement et le traitement de données du bloc 34. Ici, en particulier, le bloc 34 comporte notamment un cryptogramme ka* obtenu en chiffrant une clé secrète ka à l'aide d'une clé publique pk_{CPU} du microprocesseur 2.

A titre d'illustration, le microprocesseur 2 est conforme à l'architecture RISC (« Reduced Instructions Set Computer ») et il met en oeuvre le jeu d'instructions "RISC-V".

Ici, l'unité 10 est une unité arithmétique et logique de Nᵢₙₛₜ bits.

Le chargeur 18 charge dans la file 22 la prochaine instruction à exécuter par l'unité 10 à partir de la partie 42 de la mémoire 4. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution du code binaire 30. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier l'intégrité et l'authenticité d'une ligne de code à partir d'un code d'authentification de message plus connu sous l'acronyme MAC (« Message Authentification Code »),
- construire un code d'authentification de message,
- chiffrer un code pour obtenir un cryptogramme de ce code,
- déchiffrer un cryptogramme d'un code pour obtenir le code en clair, et
- exécuter une fonction préprogrammée Fᵢᵥ.

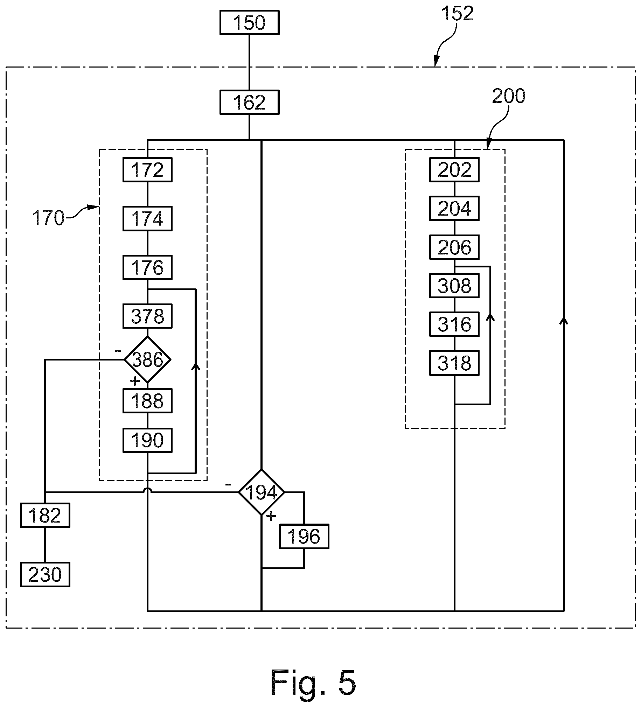

La mémoire 29 est utilisée pour stocker les informations secrètes nécessaires à la mise en oeuvre du procédé des figures 4 et 5. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour la vérification des codes d'authentification de message, et
- un clé privée secrète sk_{CPU} qui permet de déchiffrer les données qui ont été chiffrées à l'aide de la clé publique pk_{CPU}.

Dans cet exemple de réalisation, l'ensemble 12 comporte des registres généraux utilisables pour stocker tout type de données. La taille de chacun de ces registres est, par exemple, égale à N_{MM}.

Un bus 24 d'échange de données qui relie les différents composants du microprocesseur 2 entre eux est représenté sur la figure 1 pour indiquer que les différents composants du microprocesseur peuvent échanger des données entre eux. Le bus de données et le bus d'adresses qui relient le microprocesseur 2 à la mémoire 4 ont été représentés par une double flèche 50 pour simplifier la figure 1.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III : SÉCURISATION DES STRUCTURES DE DONNEES

### Premier mode de réalisation :

Dans ce mode de réalisation, les pointeurs qui pointent vers des données situées en dehors d'une structure de données sont, par exemple, sécurisés comme décrit dans la demande EP3761199A1. Ainsi, par la suite, seul le cas des pointeurs de structures de données est décrit en détail.

Le code binaire 30, en plus du code machine 32, peut comporter des structures de données à traiter lors de l'exécution du code machine 32. De plus, lors de l'exécution du code machine 32, celui-ci peut aussi générer dynamiquement des structures de données. Ces structures de données sont typiquement contenues dans la partie 44 de la mémoire 4 et/ou le tas 48.

De même, à chaque fois qu'une fonction appelante déclenche l'exécution d'une fonction appelée, le contexte d'exécution de la fonction appelante est sauvegardé dans la pile 46. La fonction appelée sauvegarde également dans la pile 46 des données telles que des variables locales. Certaines de ces variables locales enregistrées dans la pile 46 peuvent être des structures de données.

Pour traiter et manipuler ces structures de données, le code machine 32 utilise des pointeurs de structures de données. Un tel pointeur contient l'adresse, dans l'espace d'adressage du programme, à laquelle débute la structure de données à traiter. Comme décrit dans l'introduction de cette demande, un usage erroné d'un pointeur de structure de données peut être exploité pour mener à bien un attaque contre le programme. Pour détecter et mettre en échec de telles attaques, ici, chaque champ C_{j,k} d'une structure Sⱼ qui est traitée à l'aide d'un pointeur PSⱼ de structure de données, est enregistré dans une ou plusieurs lignes LD_{j,k,m} de données consécutives. Par la suite, l'indice "j" est un identifiant de la structure Sⱼ. L'indice "k" est le numéro d'ordre du champ C_{j,k} à l'intérieur de la structure Sⱼ. Par convention, ici, l'indice k du premier champ d'une structure de données est égal à zéro. Ensuite, l'indice k du second champ de cette structure de données est égal à un et ainsi de suite. L'indice "m" est un numéro d'ordre qui permet de distinguer les lignes LD_{j,k,m} dans lesquelles est enregistrée la valeur du champ C_{j,k}. Les lignes LD_{j,k,m} sont uniquement utilisées pour y enregistrer la valeur du champ C_{j,k} et aucune valeur d'un autre champ de la structure Sⱼ. Si la valeur du champ C_{j,k} peut être enregistrée dans une seule ligne, alors il n'existe qu'une seule ligne LD_{j,k,0}. A l'inverse si la valeur du champ C_{j,k} ne peut pas être enregistrée dans une seule ligne, alors plusieurs lignes LD_{j,k,m} sont utilisées pour enregistrer sa valeur. Par convention, l'indice m de la première des lignes LD_{j,k,m} est égal à zéro. Ensuite, l'indice m est incrémenté de un pour chacune des lignes LD_{j,k,m} suivantes.

Ici, la taille de la ligne LD_{j,k,m} est égale à la taille d'un mot-machine et donc égale à la taille N_{MM}.

Le pointeur PSⱼ contient l'adresse @Sⱼ de la structure Sⱼ et permet de traiter et de manipuler les différents champs de cette structure. Ce pointeur PSⱼ peut typiquement être passé en argument d'une fonction qui traite et manipule les champs de la structure Sⱼ.

La structure du pointeur PSⱼ est représentée sur la figure 2. Ici, la taille du pointeur PSⱼ est égale à la taille N_{@} des adresses mémoires. Le pointeur PSⱼ comporte :
- une première plage P₁ de bits contenant l'adresse @Sⱼ à laquelle débute la structure Sⱼ, et
- une seconde plage P₂ distincte de bits contenant un identifiant IPSⱼ du pointeur PSⱼ.

La structure Sⱼ est enregistrée dans une plage d'adresses virtuelles dont la taille est strictement inférieure à 2^{N@} afin de laisser suffisamment de place pour coder l'identifiant IPSⱼ à l'intérieur du pointeur PSⱼ. Pour cela, la taille de la plage P₁ est inférieure à N_{@}-N_{P} bits, où N_{P} est la taille, en nombre de bits, de la plage P₂. De préférence, la taille N_{P} est supérieure ou égale à 4 bits ou 8 bits ou 16 bits et, généralement, inférieure à 32 bits ou 54 bits. Ici, la taille N_{P} est égale à 8 bits et les adresses @Sⱼ sont donc codées sur 56 bits. Dans ce mode de réalisation, la plage P₁ correspond aux N_{@}-N_{P} bits de poids faibles du pointeur PSⱼ et la plage P₂ correspond au N_{P} bits de poids forts du pointeur PSⱼ. Pour obtenir l'adresse @Sⱼ de la structure Sⱼ à partir du pointeur PSⱼ, il suffit donc de masquer les bits de poids forts du pointeur PSⱼ utilisés pour enregistrer l'identifiant IPSⱼ.

L'adresse @Sⱼ est une adresse virtuelle dans l'espace d'adressage du programme. Une telle adresse virtuelle est ensuite convertie automatiquement en une adresse physique par une unité de management de mémoire plus connue sous l'acronyme MMU ("Management Memory Unit").

L'identifiant IPSⱼ est un identifiant qui permet d'identifier de façon unique le pointeur PSⱼ parmi un ensemble d'autres pointeurs utilisés lors de la même exécution du code binaire 30. Il est construit de manière à limiter la probabilité que deux pointeurs différents aient le même identifiant de pointeur. Ainsi, dans ce texte, par "identifier de façon unique un pointeur parmi un ensemble d'autres pointeurs", on désigne le fait que la probabilité que deux pointeurs utilisés lors de la même l'exécution du code binaire aient des identifiants de pointeurs égaux, est inférieure à une chance sur dix et, de préférence, une chance sur cinquante ou une chance sur cent ou une chance sur mille.

L'identifiant IPSⱼ peut être généré lors de la compilation du code source pour obtenir le code binaire 30. C'est par exemple le cas lorsque le pointeur PSⱼ est déclaré dans le code source. Lors de la compilation du code source, pour minimiser la probabilité que deux pointeurs différents aient le même identifiant de pointeur, par exemple, le compilateur génère l'identifiant IPSⱼ du pointeur par tirage aléatoire ou pseudo-aléatoire de cet identifiant dans un ensemble EIP. L'ensemble EIP contient toutes les valeurs possibles pour un identifiant de pointeur sauf les valeurs déjà attribuées à un identifiant de pointeur. Dans un autre mode de réalisation, l'identifiant IPSⱼ est à chaque fois tiré de façon aléatoire ou pseudo-aléatoire dans l'ensemble EIP. A titre d'illustration, pour faire cela, dans le cas d'un compilateur utilisant LLVM ("Low Level Virtual Machine"), l'instruction "Alloca" est modifiée pour que le pointeur généré au moment de la compilation du code source comporte un identifiant IPSⱼ et une adresse @Sⱼ. L'instruction "Alloca" génère un pointeur qui pointe sur l'adresse @Sⱼ où débute la zone mémoire dans laquelle la structure Sⱼ est enregistrée.

Un pointeur peut aussi être généré lors de l'exécution du code binaire 30. C'est notamment le cas lorsque le code binaire comporte une instruction qui, lorsqu'elle est exécutée par le microprocesseur 2, alloue dynamiquement une zone de mémoire libre pour y enregistrer une structure de données. Lorsque cette instruction est exécutée, elles génèrent un pointeur PSⱼ de structure de données qui pointe vers le début de la zone de mémoire allouée. De telles instructions sont fréquemment utilisées pour allouer dynamiquement une zone de mémoire dans le tas 48. Ensuite, une instruction qui définit la structure de données est exécutée. Cette instruction permet d'établir une correspondance entre un champ de la structure de données et des lignes de données situées à l'intérieur de la zone de mémoire allouée. Par exemple, dans un code source utilisant les librairies standards du langage C, les instructions d'allocation de zone de mémoire correspondent aux fonctions "mallocQ", "calloc()", "realloc()", ...etc. Dans ce cas, ces fonctions "malloc()", "calloc()", "reallocQ", ...etc sont modifiées pour que le pointeur PSⱼ qu'elles génèrent comporte, en plus de l'adresse @Sⱼ, l'identifiant IPSⱼ. De préférence, chaque exécution d'une telle fonction doit générer un identifiant IPSⱼ aussi différent que possible de l'identifiant IPSⱼ généré lors de la précédente exécution de cette même fonction. Pour cela, par exemple, à chaque exécution d'une telle fonction :
- l'identifiant IPSⱼ est tiré, de façon aléatoire ou pseudo-aléatoire, dans l'ensemble EIP, ou
- l'identifiant IPSⱼ est pris égal à l'empreinte numérique obtenue en appliquant une fonction de hachage à l'adresse @Sⱼ.

Un tel pointeur PSⱼ qui contient, en plus de l'adresse @Sⱼ, d'autres informations, c'est-à-dire ici l'identifiant IPSⱼ, est appelé "pointeur enrichi".

Dans un code source utilisant les librairies standards du langage C, une fonction qui permet de définir les différents champs d'une structure de données lorsqu'elle est exécuté est, par exemple, la fonction "CAST".

Les structures des les lignes de données sont identiques. Cette structure est représentée sur la figure 3 dans le cas particulier de la ligne LD_{j,k,m}.

La ligne LD_{j,k,m} comporte un cryptogramme CD_{j,k,m}* et un code MAC_{j,k,m}.

Le cryptogramme CD_{j,k,m}* est obtenu en chiffrant une concaténation CD_{j,k,m} à l'aide de la clé secrète ka et d'un vecteur d'initialisation iv_{j,k,m}. Plus précisément, le cryptogramme CD_{j,k,m}* est obtenu à l'aide de la relation suivante : CD_{j,k,m}* = fₖₐ(CD_{j,k,m} ; iv_{j,k,m}), où fₖₐ est une fonction de chiffrement, correspondant à une fonction de déchiffrement fₖₐ⁻¹, préprogrammée dans le module 28. Typiquement, la fonction fₖₐ est une fonction de chiffrement symétrique. Dès lors, la clé ka permettant de déchiffrer le cryptogramme CD_{j,k,m}* est préenregistrée dans la mémoire 29 afin de permettre au module 28 de déchiffrer ce cryptogramme CD_{j,k,m}*.

Ici, le vecteur iv_{j,k,m} est un vecteur dont la valeur dépend d'une adresse @LD_{j,k,m} et d'un identifiant IPC_{j,k} de champ. L'adresse @LD_{j,k,m} est l'adresse de la ligne LD_{j,k,m} dans l'espace d'adressage du programme. L'identifiant IPC_{j,k} est un identifiant qui permet d'identifier de façon unique un pointeur PC_{j,k} parmi un ensemble d'autres pointeurs et, en particulier, parmi d'autres pointeurs qui pointent directement sur d'autres champs de la structure Sⱼ. L'identifiant IPC_{j,k} permet, en particulier, de distinguer sans ambiguïté un pointeur qui pointe directement vers le champ C_{j,k}, des pointeurs qui pointent directement vers les champs voisins C_{j,k-1} et C_{j,k+1}. De préférence, l'identifiant IPC_{j,k} permet de distinguer le pointeur PC_{j,k} de tout pointeur qui pointe directement vers un autre champs de la structure Sⱼ. Dans ce mode de réalisation, l'identifiant IPC_{j,k} varie en fonction de la position du champ C_{j,k} par rapport à l'adresse @Sⱼ. Des exemples de déterminations de cet identifiant IPC_{j,k} sont décrits plus loin. Le pointeur PC_{j,k} a la même structure que le pointeur PSⱼ. Il contient donc les plages P₁ et P₂. Toutefois, dans le cas du pointeur PC_{j,k}, la plage P₂ contient les bits de l'identifiant IPC_{j,k} et la plage P₁ contient les bits de l'adresse @C_{j,k} à laquelle débute le champ C_{j,k}.

Dans ce mode de réalisation, le vecteur iv_{j,k,m} est codé sur le même nombre de bits que le pointeur PSⱼ.

Le module 28 comporte une fonction préprogrammée Fᵢᵥ qui, à chaque adresse @LD_{j,k,m} et à chaque identifiant IPC_{j,k}, associe une valeur différente du vecteur iv_{j,k,m}. Par exemple, la fonction Fᵢᵥ est une fonction de hachage ou de chiffrement. On a donc la relation suivante : iv_{j,k,m} = Fᵢᵥ(@LD_{j,k,m}, IPC_{j,k}).

La concaténation CD_{j,k,m} est ici la concaténation d'une donnée D_{j,k,m} et d'un code ECC_{Dj,k,m}.

Lorsque la valeur du champ C_{j,k} peut être enregistrée dans une seule ligne LD_{j,k,0}, la donnée D_{j,k,0} est égale à cette valeur du champ. Dans le cas contraire où la valeur du champ C_{j,k} est trop grande pour être enregistrée dans une seule ligne LD_{j,k,m}, alors la donnée D_{j,k,m} est égale à une partie seulement de cette valeur. Dans ce dernier cas, seule la réunion des différentes données D_{j,k,m} permet d'obtenir la valeur complète du champ C_{j,k}. Cette dernière situation se produit notamment lorsque le champ C_{j,k} est lui-même une structure de données comportant plusieurs champs. Lorsque le champ C_{j,k} est une structure de données, il contient au moins autant de ligne LD_{j,k,m} qu'il y a de champs dans cette structure de données de rang 1.

Le code ECC_{Dj,k,m} est une première étiquette d'intégrité qui permet de vérifier l'intégrité de la donnée D_{j,k,m}. Plus précisément, le code ECC_{Dj,k,m} permet de détecter une erreur dans la donnée D_{j,k,m} et, ici, de corriger cette erreur. Par exemple, le code ECC_{Dj,k,m} est le code connu sous l'acronyme BCH (Bose, Ray-Chaudhuri, Hocquenghem) qui présente l'avantage d'être particulièrement facile à mettre en oeuvre. Toutefois, tout autre code détecteur ou correcteur d'erreur connu peut être mis en oeuvre. La taille du code ECC_{Dj,k,m} est supérieure ou égale à 1 ou 2 ou 3 bits et, généralement, inférieure à Nᵢₙₛₜ. La taille du code ECC_{Dj,k,m} est déterminée en fonction de la robustesse souhaitée. Plus on veut être capable de corriger un nombre de bits erronés important dans la donnée D_{j,k,m}, plus la taille du code ECC_{Dj,k,m} sera grande.

Le code MAC_{j,k,m} est une seconde étiquette d'intégrité qui permet de vérifier l'intégrité de la ligne LD_{j,k,m}. Plus précisément, ici, le code MAC_{j,k,m} est un code permettant de vérifier l'intégrité et l'authenticité du cryptogramme CD_{j,k,m}*. Ce code est communément appelé « code d'authentification de message » et connu sous l'acronyme MAC (« Message Authentification Code »). Un tel code MAC_{j,k,m} est obtenu en construisant une empreinte numérique à partir du cryptogramme CD_{j,k,m}*. Cette empreinte numérique comporte normalement moins de bits que le cryptogramme CD_{j,k,m}*. Une telle empreinte numérique est plus connue sous le terme anglais de "digest" ou "hash". Cette empreinte numérique est construite à l'aide d'une fonction prédéterminée et de la clé secrète k' connue seulement de l'auteur du code binaire 30 et du microprocesseur 2. Ici, la clé k' est préenregistrée dans la mémoire 29. De plus, dans ce mode de réalisation, le code MAC_{j,k,m} est aussi construit à l'aide de l'adresse @LD_{j,k,m} et de l'identifiant IPC_{j,k}. Par exemple, la fonction prédéterminée est une fonction à sens unique telle qu'une fonction de hachage. Dans ce cas, généralement, l'empreinte numérique est le résultat de l'application de cette fonction de hachage à une combinaison, par exemple une concaténation, du cryptogramme CD_{j,k,m}*, de la clé k', de l'adresse @LD_{j,k,m} et de l'identifiant IPC_{j,k}.

À titre d'exemple, pour générer le cryptogramme CD_{j,k,m}* et le code MAC_{j,k,m}, un algorithme de chiffrement authentifié est utilisé. Cet algorithme de chiffrement authentifié peut être choisi parmi les différents candidats à la compétition CAESAR (« Compétition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

La ligne LD_{j,k,m} peut être construite au moment de la génération du code binaire 30 lorsque l'adresse @LD_{j,k,m} est fixée au moment de la compilation. Dans ce cas, le compilateur génère d'abord l'identifiant IPC_{j,k} du pointeur PC_{j,k} puis cet identifiant IPC_{j,k} et l'adresse @LD_{j,k,m} sont utilisés pour construire la ligne LD_{j,k,m}.

La ligne LD_{j,k,m} peut aussi être construite au cours de l'exécution du code binaire 30. C'est le cas lorsque l'adresse @LD_{j,k,m} à laquelle doit être enregistrée la ligne LD_{j,k,m} est uniquement connue au moment où le code binaire 30 s'exécute. Par exemple, cette situation se rencontre lorsque la ligne LD_{j,k,m} est enregistrée dans une zone de mémoire allouée dynamiquement dans le tas 48.

La figure 4 représente un procédé d'exécution du code binaire 30 par le microprocesseur 2.

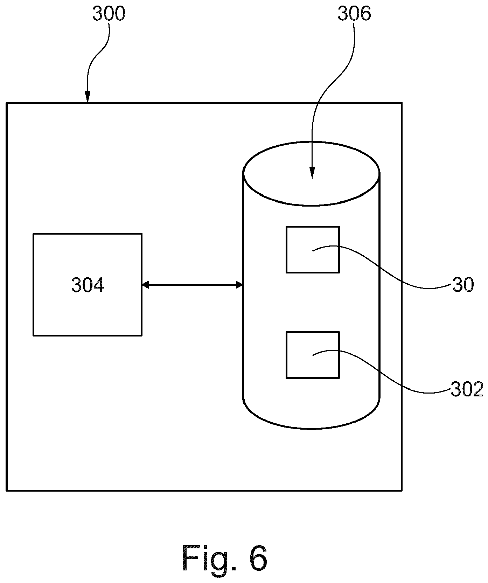

Le procédé débute par une étape 150 de génération puis de fourniture du code binaire 30 dans la mémoire 4. La génération du code binaire 30 est typiquement réalisée par un compilateur tel que celui décrit en référence à la figure 6. La fourniture du code binaire 30 consiste ici à fournir la copie 40 puis, par exemple, le microprocesseur 2 enregistre la copie 40 à l'intérieur de la mémoire 4 pour obtenir le code binaire 30 enregistré dans la mémoire 4. Ainsi, lors de l'étape 150, les lignes LD_{j,k,m} construites lors de la compilation du code source et contenues dans le code binaire 30, sont enregistrées dans la mémoire 4 et, généralement, dans la partie 44.

Ensuite, lors d'une phase 152, le microprocesseur 2 exécute le code binaire 30 et, en particulier, le code machine 32.

Lors d'une étape 162, le module 28 commence par charger le cryptogramme ka* contenu dans le bloc 34 et par le déchiffrer à l'aide de la clé sk_{CPU} contenue dans la mémoire 29. À l'issue de l'étape 162, la clé ka est contenue dans la mémoire 29.

Après l'étape 162, le microprocesseur 2 exécute, les unes après les autres, les instructions du code machine 32.

La suite du procédé est décrite dans le cas particulier de la structure Sⱼ de rang zéro. Le procédé est d'abord décrit dans le cas générique où le champ lu, traité ou écrit est le champ C_{j,k} de la structure Sⱼ. Cette description est aussi illustrée avec un exemple d'une structure de données appelée "POINT". La structure POINT est définie par les lignes de code suivantes en langage C :

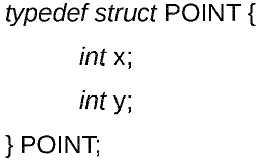

La structure POINT comporte deux champs "x" et "y". Les champs "x" et "y" correspondent aux champs, respectivement, C_{j,0} et C_{j,1} de la structure POINT.

La sécurisation de la structure de données intervient à chaque fois qu'une étape 170 de lecture du champ C_{j,k} de la structure Sⱼ est exécutée par le microprocesseur 2.

A titre d'illustration, l'exécution de l'étape 170 correspond à l'exécution d'une fonction get_y() qui retourne la valeur du champ "y" de la structure POINT lorsqu'elle est exécutée. En langage de programmation C, la fonction get_y() est définie comme suit : 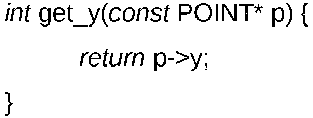 Autrement dit, la fonction get_y() reçoit comme argument un pointeur "p" qui pointe vers une structure POINT et retourne en réponse la valeur du champ "y" de cette structure. Le pointeur "p" est un exemple de pointeur PSⱼ.

Lorsque de l'étape 170, le microprocesseur 2 exécute successivement les opérations suivantes.

Tout d'abord, lors d'une opération 172, le microprocesseur 2 obtient le pointeur PSⱼ. Par exemple, dans le cas de la fonction get_y(), le pointeur PSⱼ est passé en argument de la fonction get_y().

Ensuite, lors d'une opération 174, le microprocesseur 2 construit le pointeur PC_{j,k} qui pointe directement sur le champ C_{j,k} à lire de la structure Sⱼ. La structure de ce pointeur PC_{j,k} est identique à celle du pointeur PSⱼ. Le pointeur PC_{j,k} comporte donc lui-aussi les plages P₁ et P₂ de bits. La plage P₁ comporte les bits de l'adresse @C_{j,k} à laquelle débute le champ C_{j,k} dans l'espace d'adressage du programme. L'adresse @C_{j,k} est déterminée à partir de l'adresse @Sⱼ contenue dans le pointeur PSⱼ obtenu lors de l'opération 172 et de la position du champ C_{j,k} par rapport au début de la structure de données Sⱼ.

La plage P₂ comporte les bits de l'identifiant IPC_{j,k} de ce pointeur PC_{j,k}. L'identifiant IPC_{j,k} est calculé à partir du l'identifiant IPSⱼ et d'un identifiant IC_{j,k}. L'identifiant IC_{j,k} est un identifiant qui identifie de façon unique le champ C_{j,k} au moins parmi les champs voisins C_{j,k-1} et C_{j,k+1}. Ici, l'identifiant IC_{j,k} identifie de façon unique le champ C_{j,k} parmi l'ensemble des champs de la structure Sⱼ. Dans ce mode de réalisation, l'identifiant IC_{j,k} est égal au numéro d'ordre "k" du champ C_{j,k}. L'identifiant IC_{j,k} est donc égal à k. Dans ce mode de réalisation, la taille, en nombre de bits de l'identifiant IC_{j,k} est égale à la taille de la plage P₂.

Ici, le microprocesseur 2 détermine l'identifiant IPC_{j,k} à l'aide de la relation suivante : IPC_{j,k} = G(IPSⱼ, IC_{j,k}). La fonction G() est une fonction qui combine les bits des identifiants IPSⱼ et IC_{j,k}. Par exemple, ici la fonction G() est la fonction XOR, c'est-à-dire la fonction logique OU EXCLUSIF.

Ici, le pointeur PC_{j,k} construit est égal à la concaténation de l'identifiant IPC_{j,k} et de l'adresse @C_{j,k} ainsi déterminés.

Un exemple d'algorithme pour réaliser l'opération 174 est donné ci-dessous dans le cas particulier de la structure POINT et du champ "y". Dans cet exemple, seul la construction du pointeur qui pointe directement vers le champ "y" est représentée. L'identifiant du champ "y" est déterminé au préalable et pris ici égal à "1". La détermination de l'identifiant du champ "y" n'est pas représentée. Cet algorithme est écrit en utilisant les instructions de la représentation intermédiaire du compilateur LLVM. Les instructions de cette représentation intermédiaire ne dépendent pas du jeu d'instructions du microprocesseur 2. C'est seulement après compilation, qu'elles sont traduites en instructions du jeu d'instructions du microprocesseur 2. Ainsi, cette description est générique dans le sens où elle peut être traduite dans le jeu d'instructions de n'importe quelle microprocesseur pour lequel un module de traduction a été développé. En langage technique, ce module de traduction est connu sous le terme de "module statique LLVM" ou "LLVM static module". Il existe de nombreux modules de traduction pour de nombreux microprocesseurs. En particulier, un tel module de traduction vers le jeu d'instructions "RISC-V" existe.

Par exemple, dans la représentation intermédiaire LLVM, l'opération 174 pour construire le pointeur %5 qui pointe directement sur le champ "y" de la structure POINT, est codée par les instructions suivantes :
%y = **getelementptr inbounds** %struct.POINT, %struct.POINT* %0, i32 0, i32 1,
%3 = **ptrtoint** i32* %y **to** i32
%4 = **xor** i32 %3, 0x10000000
%5 = **inttoptr** i32 %4 **to** i32*
où :
- %0 est un registre du microprocesseur 2 dans lequel est stocké le pointeur "p" qui pointe directement sur le début de la structure POINT,
- "gelelementptr" est une instruction de la représentation intermédiaire qui retourne l'adresse du champ "y" de la structure POINT désignée par le pointeur contenu dans le registre %0,
- le dernier terme "i32 1" de l'instruction getelementptr spécifie que l'adresse retournée par cette instruction est celle du champ "y" et non pas celle du champ "x". Pour obtenir l'adresse du champ "x" il faudrait remplacer le terme "i32 1" par le terme "i32 0".
- %y est un registre du microprocesseur 2 dans lequel est stocké l'adresse à laquelle débute le champ "y" de la structure POINT, cette adresse est uniquement contenue dans la plage P₁ de bits de poids faibles du registre %y,
- "ptrtoint" est une instruction de la représentation intermédiaire qui convertit le l'adresse %y en un entier codé sur 32 bits,
- %3 est un registre du microprocesseur 2 dans lequel est stocké, sous forme d'entier, l'adresse du champ "y",
- "xor" est l'instruction qui réalise un OU EXCLUSIF entre le contenu du registre %3 et l'identifiant du champ "y" préalablement calculé et codé dans la plage P₂ de bits de poids forts,
- 0x10000000 est un nombre, noté en hexadécimal, de 32 bits contenant l'identifiant du champ "y" dans la plage P₂ et une plage P₁ contenant uniquement des zéros,
- %4 est un registre du microprocesseur 2 dans lequel est stocké le résultat de l'instruction "xor",
- "intoptr" est une instruction de la représentation intermédiaire qui convertit le contenu du registre %4 en pointeur de 32 bits, et
- %5 est un registre du microprocesseur 2 dans lequel est stocké le pointeur construit qui pointe directement vers le champ "y" de la structure POINT désignée par le pointeur "p" passé en argument de la fonction get_y().

Dans l'exemple ci-dessus, la conversion du pointeur en un nombre entier puis la conversion du contenu du registre %4 en pointeur sont rendues nécessaire car l'instruction "xor" ne fonctionne que sur des nombres entiers.

Pour accélérer l'exécution de l'opération 174 par le microprocesseur 2, dans ce mode de réalisation, le jeu d'instructions RISC-V du microprocesseur 2 est complété par l'instruction suivante : xorptr rd, rs1, imm4. Lorsqu'elle est exécutée par l'unité 10, cette instruction enregistre dans un registre rd du microprocesseur 2 le résultat du OU EXCLUSIF entre la plage P₂ de bits de poids fors du pointeur contenu dans le registre rs1 et les bits de la valeur imm4 codée sur N_{P} bits. Dès lors, lors de la compilation, l'instruction "%4 = **xor** i32 %3, 0x10000000" de la représentation intermédiaire est traduite par l'instruction "xorptr %4, %3, 0x1" dans le langage machine du microprocesseur 2. Ainsi, l'unité 10 exécute en un seul cycle d'horloge cette instruction. En particulier, l'usage de cette nouvelle instruction permet d'éviter d'avoir à construire le nombre 0x10000000 à partir de l'identifiant 0x1 du champ "y" préalablement à l'exécution du OU EXCLUSIF avec le contenu du registre %3.

Lors d'une opération 176, le microprocesseur 2 extrait l'adresse @C_{j,k} à partir du pointeur PC_{j,k} construit lors de l'opération 174. Par exemple, pour cela, l'adresse @C_{j,k} est obtenue en masquant les bits de la plage P₂ de bits du pointeur PC_{j,k}. Cette opération de masquage permet d'obtenir la même adresse que si les N_{P} bits de poids forts du pointeur PC_{j,k} étaient égaux à zéro.

Ensuite, la valeur du champ C_{j,k} est chargée. Pour cela, les différentes lignes LD_{j,k,m} du champ C_{j,k} sont chargées les unes après les autres. Par exemple, les différentes lignes LD_{j,k,m} sont chargées les unes après les autres par ordre croissant d'adresses @LD_{j,k,m}. Pour charger chaque ligne LD_{j,k,m}, à chaque fois, le microprocesseur 2 exécute une instruction de chargement ayant comme opérande l'adresse @LD_{j,k,m}. L'adresse @LD_{j,k,m} est obtenue à partir de l'adresse @C_{j,k} contenue dans le pointeur PC_{j,k} précédemment construit. Plus précisément, l'adresse @LD_{j,k,0} de la première ligne LD_{j,k,0} du champ C_{j,k} est égale à l'adresse @C_{j,k}. Ensuite, les adresses des lignes suivantes LD_{j,k,m} sont obtenues en incrémentant d'un pas régulier @P l'adresse @LD_{j,k,0}. Ce pas régulier @P est égal à l'écart entre deux adresses de lignes consécutives dans la mémoire 4.

Pour chacune des lignes LD_{j,k,m}, le microprocesseur 2 exécute les opérations suivantes.

Lors d'une opération 178, le microprocesseur 2 charge la ligne LD_{j,k,m}. Pour cela, il commence par calculer l'adresse @LD_{j,k,m} de la ligne LD_{j,k,m} à charger à partir de l'adresse @C_{j,k} extraite. Par exemple, l'adresse @LD_{j,k,m} est calculée à l'aide de la relation suivante : @LD_{j,k,m} = @C_{j,k} +m x @P, où le symbole "x" désigne l'opération de multiplication. L'adresse @LD_{j,k,m} calculée est ensuite utilisée comme opérande de l'instruction de chargement exécutée par l'unité 10. En réponse, la mémoire 4 transmet sur le bus de données, la ligne LD_{j,k,m}. La ligne LD_{j,k,m} reçue est alors enregistrée dans un registre du microprocesseur 2.

Ensuite, lors de l'opération 186, le module 28 vérifie que l'identifiant IPC_{j,k} contenu dans le pointeur PC_{j,k} construit lors de l'opération 174 correspond à l'identifiant IPC_{j,k} associé au champ C_{j,k} lors de l'écriture de ce champ dans la mémoire 4. Par la suite, pour distinguer l'identifiant IPC_{j,k} contenu dans le pointeur PC_{j,k} de l'identifiant IPC_{j,k} associé au champ C_{j,k} lors de l'écriture, l'identifiant IPC_{j,k} contenu dans le pointeur PC_{j,k} est noté IPC'_{j,k}. Ici, l'identifiant IPC'_{j,k} correspond à l'identifiant IPC_{j,k} si ces deux identifiants sont égaux.

Dans ce mode de réalisation, pour vérifier que l'identifiant IPC'_{j,k} correspond à l'identifiant IPC_{j,k}, le module 28 vérifie l'intégrité et l'authenticité du cryptogramme CD_{j,k,m}* à l'aide du code MAC_{j,k,m} contenu dans la ligne LD_{j,k,m} chargée. Pour cela, le module 28 construit un code MAC_{j,k,m}' en utilisant le même algorithme que celui mis en oeuvre pour construire le code MAC_{j,k,m} sauf qu'il utilise le cryptogramme CD_{j,k,m}* chargé lors de l'opération 178. De plus, lors de l'opération 186, le module 28 utilise l'identifiant IPC'_{j,k} et l'adresse @LD_{j,k,m} déterminés lors de l'opération 178. Par exemple, le cryptogramme CD_{j,k,m}* est concaténé avec la clé k', l'adresse @LD_{j,k,m} et l'identifiant IPC'_{j,k}. Le code MAC_{j,k,m}' est alors égal à l'empreinte numérique de cette concaténation. Si le code MAC_{j,k,m}' ainsi construit est identique au code MAC_{j,k,m} chargé, alors l'intégrité et l'authenticité du cryptogramme CD_{j,k,m}* est confirmée. Dans ce cas, cela signifie que l'identifiant IPC'_{j,k} utilisé pour construire le code MAC_{j,k,m}' est égal à l'identifiant IPC_{j,k} utilisé pour construire le code MAC_{j,k,m}. Le cryptogramme CD_{j,k,m}* est alors enregistré dans un registre du microprocesseur. Dans le cas contraire, la vérification de l'intégrité de la ligne LD_{j,k,m} échoue et le module 28 procède à une étape 182.

Lors de l'étape 182, le module 28 déclenche le signalement d'une faute d'exécution.

A l'inverse, lorsque l'intégrité et l'authenticité du cryptogramme CD_{j,k,m}* est confirmée, le module 28 procède, lors d'une opération 188, à son déchiffrement.

Lors de l'opération 188, le module 28 déchiffre le cryptogramme CD_{j,k,m}* en utilisant la clé ka, le vecteur d'initialisation iv_{j,k,m} et la fonction fₖₐ⁻¹ pour obtenir la concaténation CD_{j,k,m} déchiffrée et donc la donnée D_{j,k,m} et le code ECC_{Dj,k,m} déchiffrés. La clé ka est celle qui a été enregistrée dans la mémoire 29 lors de l'étape 162. Lors de l'opération 188, le vecteur iv_{j,k,m} est calculé par le module 28 à l'aide de la relation : iv_{j,k,m} = Fᵢᵥ(@LD_{j,k,m}; IPC'_{j,k}), où @LD_{j,k,m} et IPC'_{j,k} sont l'adresse de la ligne LD_{j,k,m} et l'identifiant contenu dans la plage P₂ du pointeur PC_{j,k} construit lors de l'étape 174.

Une fois que le cryptogramme CD_{j,k,m}* a été déchiffré, lors d'une opération 190, le module 28 enregistre la donnée D_{j,k,m} déchiffrée et le code ECC_{Dj,k,m} déchiffré dans un registre R_{j,k,m} en attendant que cette donnée soit traitée par l'unité 10.

Si le champ C_{j,k} contient encore une ligne LD_{j,k,m} à charger, alors le procédé retourne à l'étape 178. Dans le cas contraire, la sécurisation du champ C_{j,k} chargé s'achève et le procédé se poursuit par l'exécution des instructions suivantes du code binaire.

Dans le cas de la structure POINT décrite ici, le champ "y" est enregistré dans une seule ligne LD_{j,1,0}. Par conséquent, les opérations 178, 186 et 188 sont exécutées une seule fois.

L'opération 186 permet de valider l'intégrité et l'authenticité de chaque ligne LD_{j,k,m} chargée. En particulier, l'opération 186 permet de détecter un remplacement de la ligne LD_{j,k,m} par une nouvelle ligne de donnée construite par un auteur qui ne connaît pas la clé k'. L'opération 186 permet aussi de détecter la permutation de la ligne LD_{j,k,m} avec une autre ligne LDₓ enregistrée à une adresse @ₓ située en dehors du champs C_{j,k,}.

L'opération 186 permet aussi de détecter pratiquement tous les usages erronés d'un pointeur. Par exemple, l'opération 186 détecte une utilisation incorrecte d'un pointeur PDₓ pour lire la ligne LD_{j,k,m} ou pour remplacer la ligne LD_{j,k,m} par une nouvelle ligne LDₓ. Plus précisément, si un autre pointeur PDₓ, différent du pointeur PC_{j,k}, est utilisé pour lire la ligne LD_{j,k,m,} l'identifiant IPₓ contenu dans le pointeur PDₓ est différent de l'identifiant IPC_{j,k}. Puisque c'est l'identifiant IPₓ qui est utilisé pour construire le code MAC_{j,k,m}', le code MAC_{j,k,m}' construit est différent du code MAC_{j,k,m}. Cet usage erroné du pointeur PDₓ déclenche donc le signalement d'une faute d'exécution. Si le pointeur PDₓ est utilisé pour écrire une ligne LDₓ à la place de la ligne LD_{j,k,m}, alors le code MACₓ de la ligne LDₓ est construit à l'aide de identifiant IPₓ. Ensuite, lors de l'utilisation suivante du pointeur PC_{j,k}, le code MAC_{j,k,m}' construit est différent du code MACₓ car c'est l'identifiant IPC_{j,k}, et non pas l'identifiant IPₓ, qui est utilisé. Dès lors, cette utilisation erronée du pointeur PDₓ est aussi détectée. Grâce à cela, les attaques par dépassement de tampon sont détectées. En particulier, si le pointeur IPₓ utilisé pour écrire la ligne LD_{j,k,m} est le pointeur PC_{j,k-1} utilisé pour écrire une valeur dans le champ voisin C_{j,k-1} de la même structure Sⱼ, alors l'identifiant IPC_{j,k-1} est différent de l'identifiant IPC_{j,k}. En effet, l'identifiant IC_{j,k-1} est différent de l'identifiant IC_{j,k}. Ainsi, grâce à l'utilisation des identifiants de champ pour construire chaque pointeur PC_{j,k}, il est possible de détecter le débordement de la valeur d'un champ de la structure Sⱼ sur un autre champ de cette même structure Sⱼ.

L'opération 186 permet aussi de détecter l'utilisation du pointeur PC_{j,k} après que la zone de mémoire contenant la ligne LD_{j,k,m} ait été libérée. En effet, typiquement, après la libération de cette zone de mémoire, celle-ci est réutilisée pour y enregistrer d'autres lignes de données. Pour réutiliser cette zone de mémoire, un nouveau pointeur PDₓ est généré puis utilisé pour enregistrer ces autres lignes LDₓ. Ce nouveau pointeur PDₓ comporte un identifiant IPₓ différent de l'identifiant IPC_{j,k}. Ensuite, si le pointeur PSⱼ ou PC_{j,k} est utilisé pour lire la ligne LDₓ, ceci est détecté. En effet, dans ce cas là aussi, le code MAC_{j,k,m}' construit sera différent du code MACₓ de la ligne LDₓ. Ainsi, l'opération 186 permet de détecter des attaques utilisant des "dangling pointer" ou des attaques du type "use-after-free".

Lorsque la prochaine instruction qui va être exécutée par l'unité 10 est une instruction qui traite la donnée D_{j,k,m} du champ C_{j,k}, le module 28 procède à des opérations 194 et 196. Le module 28 identifie que la prochaine instruction à exécuter va traiter la donnée D_{j,k,m} car cette instruction comporte généralement un opérande qui identifie le registre R_{j,k,m} dans lequel est enregistrée la donnée D_{j,k,m}.

Lors de l'opération 194, le module 28 vérifie une nouvelle fois l'intégrité de la donnée D_{j,k,m}. Plus précisément, il vérifie s'il existe une erreur dans la donnée D_{j,k,m} contenue dans le registre R_{j,k,m} à l'aide du code ECC_{Dj,k,m} également contenue dans ce registre R_{j,k,m}. Cette opérations 194 permet de détecter une attaque par injection de faute dans le registre R_{j,k,m}.

Si le module 28 détecte une erreur, alors il procède immédiatement à l'étape 182. De plus, en parallèle, lors d'une opération 196, le module 28 corrige la donnée D_{j,k,m} à l'aide du code ECC_{Dj,k,m}. Ainsi, le traitement de la donnée D_{j,k,m} peut être poursuivie même si une erreur est détectée.

On notera que dans un mode de réalisation où l'opération 186 est omise, l'opération 194 permet aussi de détecter les mêmes usages erronés de pointeurs que ceux détectables lors de l'opération 186. En effet, la donnée D_{j,k,m} et le code ECC_{Dj,k,m} ont été obtenus en déchiffrant le cryptogramme CD_{j,k,m}* notamment en utilisant l'identifiant IPC'_{j,k} du pointeur construit lors de l'opération 174. Dès lors, si le pointeur construit lors de cette opération 174 n'est pas le pointeur PC_{j,k} mais un autre pointeur PDₓ différent, la donnée D_{j,k,m} déchiffrée et le code ECC_{Dj,k,m} déchiffré lors de l'opération 188 sont incorrects et la vérification de l'intégrité de la ligne LD_{j,k,m} lors de l'opération 194 échoue donc.

Ensuite, à l'issue de l'opération 196 ou si aucune erreur n'a été détectée lors de l'opération 194, l'unité 10 exécute l'instruction qui traite la donnée D_{j,k,m}.

En parallèle, à chaque fois que l'unité 10 exécute une instruction qui conduit à enregistrer une nouvelle donnée D_{j,k,m} dans un registre, noté ici R_{j,k,m}, de l'ensemble 12, le module 28 construit la concaténation CD_{j,k,m} et l'enregistre dans le registre R_{j,k,m}. Ultérieurement, l'unité 10 exécute une étape 200 d'écriture du champ C_{j,k} dans la mémoire 4. Par exemple dans le cas où la structure Sⱼ est la structure POINT précédemment définie, cette étape d'écriture correspond à l'exécution de la fonction suivante écrite en langage C : 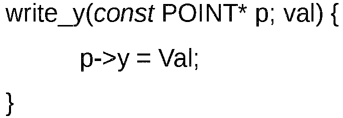 L'exécution de cette fonction write_y() par le microprocesseur 2 provoque l'enregistrement de la valeur "val" dans le champ "y" de la structure POINT pointée par le pointeur "p". Le pointeur "p" et la valeur "val" sont ici passés en argument de la fonction write_y().

Lors de l'étape 200, le microprocesseur 2 commence par exécuter les opérations suivantes :
- lors d'une opération 202, il obtient le pointeur PSⱼ, puis
- lors d'une opération 204, il construit le pointeur PC_{j,k} qui pointe directement sur le champ C_{j,k} de la structure Sⱼ.

Préalablement à l'exécution de l'opération 202, le pointeur PSⱼ a été généré. Par exemple, il est défini statiquement dans le code binaire 30 ou généré en réponse à l'exécution d'une fonction d'allocation dynamique d'une zone de mémoire, par exemple dans le tas 48, pour y enregistrer la structure Sⱼ.

Lors de l'opération 202, dans le cas de la fonction write_y(), le pointeur "p" de structure de données est obtenu à partir des arguments de cette fonction.

L'opération 204 est identique à l'opération 174.

Lors d'une opération 206, le microprocesseur 2 extrait l'adresse @C_{j,k} à partir du pointeur PC_{j,k} construit lors de l'opération 204. Cette opération est, par exemple, identique à l'opération 176. Lors de cette opération, l'identifiant IPC_{j,k} est aussi extrait du pointeur PC_{j,k}.

Ensuite, les différentes lignes LD_{j,k,m} du champ C_{j,k} sont écrites les unes après les autres dans la mémoire 4. Pour cela, les opérations suivantes sont exécutées pour chaque donnée D_{j,k,m} du champ C_{j,k}.

Lors d'une opération 208, le module 28 construit l'adresse @LD_{j,k,m} de la ligne LD_{j,k,m} à partir de l'adresse @C_{j,k} extraite lors de l'opération 206. Par exemple, ceci est réalisé comme décrit dans le cas de l'opération 178.

Ensuite, lors d'une opération 216, le module 28 construit la ligne de donnée LD_{j,k,m} qui doit être enregistrée à l'adresse @LD_{j,k,m}. Pour cela, le module 28 :
- obtient ou construit la concaténation CD_{j,k,m}, puis
- calcule le vecteur iv_{j,k,m} à l'aide de la relation: iv_{j,k,m} = Fᵢᵥ(@LD_{j,k,m}, IPC_{j,k}), puis
- construit le cryptogramme CD_{j,k,m}* à l'aide de la relation CD_{j,k,m}* = fₖₐ(CD_{j,k,m} ; iv_{j,k,m}), puis
- calcule le code MAC_{j,k,m} à l'aide du cryptogramme CD_{j,k,m}*, de la clé k', de l'adresse @LD_{j,k,m} et de l'identifiant IPC_{j,k}, puis
- concatène le cryptogramme CD_{j,k,m}* et le code MAC_{j,k,m} pour former la ligne LD_{j,k,m}.

Ensuite, lors d'une opération 218, le microprocesseur 2 enregistre la ligne LD_{j,k,m} construite dans la mémoire 4 à l'adresse @LD_{j,k,m}. L'enregistrement du code MAC_{j,k,m} associé au cryptogramme CD_{j,k,m}* permet d'enregistrer, dans la mémoire 4, l'association entre le champ C_{j,k} et l'identifiant IPC_{j,k} car le code MAC_{j,k,m} a été calculé à l'aide de cet identifiant IPC_{j,k}.

Si le champ C_{j,k} contient d'autres données D_{j,k,m} à écrire, alors le procédé retourne à l'étape 208. Dans le cas contraire, l'étape 200 d'écriture s'achève et le procédé se poursuite par l'exécution des instructions suivantes du code binaire.

Dans le cas de la structure POINT décrite ici, le champ "y" est enregistré dans une seule ligne LD_{j,1,0}. Par conséquent, les opérations 208, 216 et 218 sont exécutées une seule fois.

Lors de l'exécution du code binaire, si un usage erronée d'un pointeur de structure de données se produit, le microprocesseur 2 signale, lors de l'étape 182, une faute dans l'exécution du code binaire 30. En réponse à un tel signalement, lors d'une étape 230, le microprocesseur 2 met en oeuvre une ou plusieurs contre-mesures. De très nombreuses contre-mesures sont possibles. Les contre-mesures mises en oeuvre peuvent avoir des degrés de sévérité très différents. Par exemple, les contre-mesures mises en oeuvre peuvent aller d'un simple affichage ou une simple mémorisation d'un message d'erreur sans interrompre l'exécution normale du code binaire, jusqu'à une mise hors service définitive du microprocesseur 2. Le microprocesseur 2 est considéré comme étant hors service lorsqu'il est définitivement placé dans un état où il est incapable d'exécuter un quelconque code binaire. Entre ces degrés de sévérité extrêmes, il existe de nombreuses autres contre-mesures possibles telles que celles citées dans la demande EP3761199A1.

De plus, ici, la contre-mesure mise en oeuvre lors de l'étape 230 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 186 ou 194.

Tout ce qui a été décrit ici dans le cas particulier d'une structure Sⱼ de rang 0 s'applique à une structure de rang supérieur à zéro. Par exemple, si le champ C_{j,k} est lui-même une structure S1ₖ de données, alors tout ce qui a été décrit précédemment est exécuté pour la structure S1ₖ de rang 1 et non pas pour la structure Sⱼ de rang 0. Plus précisément, dans ce cas, c'est le pointeur PC_{j,k} qui remplit le rôle de pointeur vers la structure de données S1ₖ. Ceci est rendu possible car la structure du pointeur PC_{j,k} est identique à la structure d'un pointeur de structure de données. Le pointeur PC_{j,k} est construit comme décrit en référence à l'opération 174. Dès lors, lors de l'exécution de l'opération 174 pour la structure S1ₖ, un pointeur PC1_{k,n} qui pointe directement vers l'adresse à laquelle débute un champ C1_{k,n} à lire de la structure S1ₖ est construit à partir du pointeur PC_{j,k}. L'identifiant IPC1_{k,n} de ce pointeur PC1_{k,n} est construit à partir de l'identifiant IPC_{j,k} et d'un identifiant IC1_{k,n} du champ C1_{k,n}. Ainsi, la valeur de l'identifiant IPC1_{k,n} construit dépend de la valeur des identifiants IPSⱼ, IC_{j,k} et IC1_{k,n}. En effet, la valeur de l'identifiant IPC_{j,k} dépend de la valeur de l'identifiant IC_{j,k}. Il est à remarquer que l'instruction xorptr précédemment décrite est alors exécutée de façon récursive pour construire successivement le pointeur PC_{j,k} puis le pointeur PC1_{k,n}. Cet enseignement permet aussi de traiter le cas des structures de données de rang supérieur à un. Dans ce cas, l'identifiant de pointeur de champ construit pour un champ d'une structure de rang supérieur à un est fonction de tous les identifiants de champ des structures de rangs inférieurs et de l'identifiant IPSⱼ de la structure de rang 0.

### Deuxième mode de réalisation :

D'autres méthodes existent pour créer l'association entre l'identifiant IPC_{j,k} et le champ C_{j,k} et mémoriser cette association. En particulier, pour faire cela, il n'est pas nécessaire d'utiliser le code MAC_{j,k,m} des lignes LD_{j,k,m}. Dans cette section, un deuxième manière de faire cela est présentée.

Pour accélérer les transferts de données entre la mémoire 4 et le microprocesseur 2, il est possible de faire ces transferts par bloc de plusieurs données, plutôt qu'individuellement pour chaque donnée. Dans ce cas, chaque bloc de données est enregistré dans la mémoire 4 sous la forme d'un bloc de données chiffrées et authentifiées. Un tel bloc de données chiffrées et authentifiées comprend notamment :
- un cryptogramme du bloc de données en clair,
- des métadonnées, et
- un code d'authentification du cryptogramme et des métadonnées.

Par exemple, la fonction de chiffrement utilisée pour obtenir le cryptogramme du bloc de données en clair est la même fonction fₖₐ que celle utilisée dans le premier mode de réalisation. Ici, à titre d'illustration, la fonction fₖₐ est une fonction de chiffrement par bloc, plus connue sous le terme anglais de "block cipher". Le cryptogramme du bloc de données en clair est alors obtenu en traitant le bloc de données comme un seul bloc de bits et sans distinguer les données les unes des autres. Ainsi, pour obtenir ce cryptogramme, une seule opération de chiffrement est exécutée au lieu d'une opération de chiffrement pour chaque donnée de ce bloc de données. En contrepartie, le cryptogramme ne peut être déchiffré qu'en une seule opération de déchiffrement. En particulier, il n'est pas possible de déchiffrer qu'une partie seulement des données sans déchiffrer la totalité du cryptogramme.

De façon similaire, le code d'authentification est commun à l'ensemble des données du bloc de données. Il est donc calculé en une seule opération et en traitant le bloc de données comme un seul bloc. Ainsi, on évite de construire un code d'authentification pour chaque donnée de ce bloc de données. Cela accélère la construction du code d'authentification.

L'utilisation et le fonctionnement de tels blocs de données chiffrées et authentifiées sont décrits dans la demande américaine déposée le 02/12/2020 sous le numéro 17/109,424. Ainsi, pour les connaissances de base sur le fonctionnement et l'utilisation de telles blocs, le lecteur peut consulter cette demande. Par la suite, seules les adaptations spécifiques de ces blocs pour mettre en oeuvre le procédé de la figure 5 sont décrites.

Dans un tel contexte, une ou plusieurs des données du bloc de données peuvent être des données D_{j,k,m} qui appartiennent au champ C_{j,k} de la structure Sⱼ. Dans ce cas, l'identifiant IPC_{j,k} associé à chaque donnée D_{j,k,m} du bloc est enregistré dans les métadonnées à un emplacement associé à la donnée D_{j,k,m}. Le code d'authentification du bloc de données chiffrées et authentifiées est quant à lui calculé à partir du cryptogramme des données du bloc et, de préférence, aussi à partir des métadonnées.

Le procédé de la figure 5 est identique au procédé de la figure 4 sauf que les opérations 178, 186, 208, 216 et 218 sont remplacées, respectivement, par des opérations 378, 386, 308, 316 et 318.

Lors de la lecture du champ C_{j,k}, l'opération 178 est remplacée par l'opération 378 de chargement de la donnée D_{j,k,m} située à l'adresse @D_{j,k,m}. L'adresse @D_{j,k,m} est calculée à partir de l'adresse @C_{j,k} extraite lors de l'opération 176. Par exemple, pour cela, il est procédé comme précédemment décrit pour calculer l'adresse @LD_{j,k,m} sauf que le pas @P est égal à l'écart entre deux données successives du champ C_{j,k}. A partir de l'adresse @D_{j,k,m}, le module 28 identifie le bloc de données chiffrées et authentifiées contenant cette donnée D_{j,k,m}. C'est ce bloc entier qui est alors chargé dans des registres ou une mémoire du microprocesseur 2.

Lors de l'opération 386, le module 28 vérifie que l'identifiant IPC'_{j,k} contenu dans le pointeur PC_{j,k} construit lors de l'opération 174 correspond à l'identifiant IPC_{j,k} associé à la donnée D_{j,k,m} dans le bloc chargé lors de l'opération 378. Pour cela, dans ce mode de réalisation, le microprocesseur extrait l'identifiant IPC_{j,k} contenu dans les métadonnées du bloc chargé et associé à la donnée D_{j,k,m}. Ensuite, il le compare à l'identifiant IPC'_{j,k,m}. Si ces deux identifiants correspondent, alors le procédé se poursuit par l'opération 188. Dans le cas contraire, le procédé se poursuit par l'étape 182.

Lors de l'écriture du champ C_{j,k} dans la mémoire 4, le microprocesseur 2 écrit chaque donnée D_{j,k,m} de ce champ dans la mémoire 4. La différence par rapport au mode de réalisation de la figure 4 est qu'ici écrire une donnée D_{j,k,m} dans la mémoire 4 consiste à générer un bloc de données chiffrées et authentifiées qui contient cette donnée D_{j,k,m} puis à enregistrer ce bloc de données généré dans la mémoire 4.

Ainsi, lors de l'opération 308, le module 28 construit l'adresse @D_{j,k,m} de chaque données à enregistrer. Par exemple, pour cela, il procède comme lors de l'opération 378.

Ensuite, lors de l'opération 316, le module 28 construit un bloc B de données chiffrées et authentifiées contenant la donnée D_{j,k,m}. Pour cela, le module 28 :
- chiffre le bloc de plusieurs données en clair contenant la donnée D_{j,k,m} pour obtenir un cryptogramme BD* de ces données,
- introduit, dans les métadonnées MD de ce bloc, l'identifiant IPC_{j,k} à l'emplacement réservé à cet effet et associé à la donnée D_{j,k,m}, puis
- calcule un code d'authentification MAC du bloc B à l'aide du cryptogramme BD* et des métadonnées MD.

Lors de l'opération 318, le bloc B construit lors de l'opération 316 est enregistré dans la mémoire 4.

Si plusieurs données D_{j,k,m} appartiennent au même bloc B de données chiffrées et authentifiées, les opérations 308, 316 et 318 sont exécutées une seule fois pour cet ensemble de données D_{j,k,m}. A l'inverse, si les données D_{j,k,m} n'appartiennent pas toutes au même bloc de données chiffrées et authentifiées, alors les opérations 308, 316 et 318 sont réitérées autant de fois qu'il y a de bloc à construire et à enregistrer.

### CHAPITRE IV : GENERATION DU CODE BINAIRE

La figure 6 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les pointeurs PSⱼ pour chaque structure de données Sⱼ définies, par exemple, en tant que structure de données statique ou comme une variable globale. En particulier, lors de la compilation, le compilateur génère pour chacun de ces pointeurs PSⱼ l'identifiant IPSⱼ correspondant. Ensuite, le compilateur construit, pour chaque champ C_{j,k} de ces structures Sⱼ, le pointeur PC_{j,k} comme décrit en référence à l'opération 174 ou 204. Enfin, si des valeurs initiales sont affectées à ces champs C_{j,k}, le compilateur génère les lignes LD_{j,k,m} qui contiennent ces valeurs comme décrit dans le cas de l'étape 200. La conception et la réalisation d'un tel compilateur sont à la portée de l'homme du métier à partir des explications données dans cette description. Par exemple, pour cela, le compilateur 30 repère et identifie automatiquement les champs qui sont accédés à l'aide de pointeurs de structure de données. Par exemple, le compilateur 300 est un compilateur utilisant la couche d'abstraction LLVM.

### CHAPITRE V: VARIANTES :

### Variantes de l'identifiant de champ :

L'identifiant IC_{j,k} de champ peut être obtenu de différente façon. Par exemple, en variante, l'identifiant IC_{j,k} est calculé à l'aide de la relation suivante : IC_{j,k} = (@C_{j,k}-@Sⱼ) modulo (NbBitIP), où :
- (@C_{j,k}-@Sⱼ) est l'écart entre l'adresse où débute la structure Sⱼ et l'adresse où débute le champ C_{j,k},
- "modulo" est l'opération de l'arithmétique modulaire qui au couple (a, b) d'entiers, associe le reste de la division euclidienne de a par b,
- NbBitlP est égale au nombre de valeurs possibles pour un identifiant de pointeur.

Ici, NbBitlP est égal à 2^{Np}.

Dans un autre mode de réalisation, l'identifiant IC_{j,k} est obtenu par tirage aléatoire. Dans ce cas, pour chaque la structure Sⱼ, une table associant chaque champ C_{j,k} à son identifiant IC_{j,k} est enregistrée dans la mémoire 4. Lors de la construction du pointeur IPC_{j,k}, le microprocesseur 2 lit l'identifiant IC_{j,k} qui est associé à ce champ C_{j,k} dans cette table.

D'autres fonctions G() que le OU EXCLUSIF peuvent être utilisées pour calculer l'identifiant IPC_{j,k} à partir des identifiants IPSⱼ et IC_{j,k}. En fait, tout autre fonction qui conserve la diversité des bits de la plage P₂ lorsqu'elle est appliquée plusieurs fois à ces bits peut être utilisée. Par exemple, en variante, la fonction G() est une fonction de hachage ("hash" en anglais) appliquée à la concaténation des identifiants IPSⱼ et IC_{j,k}.

### Variantes des lignes de données LD_{j,k,m} :

Les différentes variantes décrites dans le chapitre "Variantes de la sécurisation des données" de la demande EP3761199A1 peuvent être transposées sans difficulté dans le contexte de la présente demande.

Par exemple, le code ECC_{Dj,k,m} peut être remplacé par un simple code détecteur d'erreur permettant seulement de détecter une erreur dans la donnée D_{j,k,m}. Un code détecteur d'erreur ne permet pas de corriger l'erreur détectée. Dans ce cas, l'opération 196 de correction de l'erreur est omise.

Dans une variante simplifiée, le code ECC_{Dj,k,m} est omis. Dans ce mode de réalisation, le microprocesseur 2 n'est plus capable de détecter une erreur dans le déchiffrement du cryptogramme CD_{j,k,m}* ou une modification de la donnée D_{j,k,m} qui interviendrait après son déchiffrement et avant son traitement par l'unité 10. Dans ce cas, les opérations 194 et 196 sont omises.

Dans une variante simplifiée, le cryptogramme CD_{j,k,m}* est construit sans utiliser l'identifiant IPC_{j,k} et/ou sans utiliser l'adresse @LD_{j,k,m}. Lorsque l'identifiant IPC_{j,k} n'est pas utilisé pour construire le cryptogramme CD_{j,k,m}*, alors seul le code MAC_{j,k,m} permet de détecter un usage erroné d'un pointeur.

Le code MAC_{j,k,m} peut aussi être construit sans prendre en compte l'adresse @LD_{j,k,m} de la ligne. Si ce mode de réalisation est combiné à la variante du précédent paragraphe, alors des lignes LD_{j,k,m} du champ C_{j,k} peuvent être interverties sans que cela puisse être détecté.

De nombreux modes de réalisation de la fonction fₖₐ sont possibles. Par exemple, les fonctions fₖₐ et fₖₐ⁻¹ peuvent aussi être des algorithmes de chiffrement/déchiffrement dans lesquels le vecteur iv_{j,k,m} n'est pas utilisé. Tout ce qui a été décrit ici s'applique alors à l'identique à un tel algorithme de chiffrement/déchiffrement en remplaçant simplement le terme "vecteur d'initialisation" par le terme "clé".

En variante, dans le deuxième mode de réalisation, la fonction de chiffrement fₖₐ est une fonction de chiffrement symétrique qui chiffre les données du bloc de données en clair les unes après les autres dans un ordre prédéterminé. Dans ce cas, le cryptogramme obtenu doit aussi être déchiffré dans le même ordre prédéterminé. Ainsi, dans ce cas, à partir de ce cryptogramme, la fonction fₖₐ⁻¹ permet seulement d'obtenir, les unes après les autres, les données en clair dans l'ordre prédéterminé. Par exemple, cette fonction fₖₐ est une fonction de chiffrement par flux plus connue sous le terme anglais de "stream cipher". Cette fonction fₖₐ est alors initialisée avec le vecteur ivᵢ au début du chiffrement de chaque bloc de données en clair.

Dans le cas où la fonction fₖₐ⁻¹ permet d'obtenir les données les unes après les autres, dans un mode de réalisation avantageux, les métadonnées et, en particulier, le vecteur ivᵢ est situé au début du bloc de données chiffrées et authentifié de manière à ce que le vecteur ivᵢ soit chargé en premier dans le microprocesseur. Dans ce cas, le module 28 peut commencer à déchiffrer le cryptogramme au fur et à mesure qu'il est reçu sans attendre que ce cryptogramme ait été entièrement chargé dans le microprocesseur. Ceci est avantageux lorsque la taille du cryptogramme est supérieure à la taille du bus de données utilisé pour le transférer vers le microprocesseur. En effet, dans une telle situation, le cryptogramme est transféré par parties successives vers le microprocesseur. Il faut donc exécuter, les unes après les autres, plusieurs opérations de transfert entre la mémoire 4 et le microprocesseur pour transférer le cryptogramme complet. Lorsque le vecteur ivᵢ est reçu en premier, le déchiffrement de la première partie reçue du cryptogramme peut débuter avant que la partie suivante du cryptogramme soit reçue. Ainsi, l'exécution de la fonction fₖₐ⁻¹ permet d'obtenir, dans l'ordre prédéterminé, d'abord la première donnée, puis la deuxième donnée et ainsi de suite jusqu'à la dernière données. Dans ce mode de réalisation, l'opération de chargement du bloc de données chiffrées et authentifiées et l'opération de déchiffrement du cryptogramme peuvent être, en partie, réalisées en parallèle. Avantageusement, dans ce mode de réalisation, pour gagner encore plus de temps, une donnée qui vient d'être déchiffrée peut être utilisée et traitée par le microprocesseur avant que le code d'authentification du bloc ait été vérifié. Si ultérieurement, la vérification de l'intégrité du bloc échoue, alors l'opération 182 est immédiatement déclenchée. Si ultérieurement, au contraire, la vérification de l'intégrité du bloc réussit, alors la poursuite de l'utilisation des données du bloc de données en clair est autorisée.

En variante, la fonction Fᵢᵥ est identique à la fonction fₖₐ sauf qu'elle est appliquée à l'adresse @LD_{j,k,m} et à l'identifiant IPC_{j,k}. La fonction Fᵢᵥ peut aussi utiliser le même algorithme de chiffrement que la fonction fₖₐ mais avec une clé de chiffrement différente de la clé ka.

Dans une variante simplifiée, la fonction Fᵢᵥ est la fonction identité. Dans ce cas, le vecteur iv_{j,k,m} est, par exemple, systématiquement égal au pointeur PC_{j,k}.

En variante chaque ligne LD_{j,k,m} peut en plus comporter un code ECC_{Lj,k,m}. Le code ECC_{Lj,k,m} est un code correcteur d'erreur qui permet de détecter et de corriger une erreur dans le cryptogramme CD_{j,k,m}* et le code MAC_{j,k,m}. Il est par exemple construit et utilisé comme décrit dans la demande EP3761199A1.

Pour détecter un usage erroné du pointeur PSⱼ, un seul du code MAC_{j,k,m} et du code ECC_{Dj,k,m} est nécessaire. Ainsi, dans un mode de réalisation simplifié, le code MAC_{j,k,m} est omis et l'étape 186 est omise. Dans un autre mode de réalisation simplifié, c'est le code ECC_{Dj,k,m} qui est omis et les étapes 194 et 196 sont omises.

Le nombre de bits et l'emplacement des bits de la plage P₂ peuvent être modifiés. Par exemple, la plage P₂ correspond aux bits de poids faibles des pointeurs. Dans ce cas, il faut adapter le masque utilisé pour extraire, respectivement, l'identifiant de pointeur et l'adresse dans ce pointeur.

### Variantes du procédé de sécurisation des structures de données :

D'autres modes de réalisation de l'opération 186 ou 386 sont possibles. Par exemple, lors de l'opération 186 ou 386, les identifiants IPC'_{j,k} et IPC_{j,k} sont dit correspondant si l'écart entre ces deux identifiants est inférieur, en valeur absolue, à un seuil prédéterminé.

En variante, l'opération 186 se poursuit systématiquement par l'opération 188 même si l'intégrité ou l'authenticité du cryptogramme n'a pas pu être confirmée. Dans ce cas, l'opération 186 sert à déclencher le signalement d'une faute d'exécution sans interrompre l'exécution du code binaire.

Il n'est pas nécessaire que les structures des pointeurs PSⱼ et PC_{j,k} soient identiques. Dans le cas où les structures des pointeurs PSⱼ et PC_{j,k} sont différentes, alors l'opération 174 ne peut pas être simplement réitérée en utilisant le pointeur PC_{j,k} comme un pointeur vers une structure de données de rang supérieur. Par exemple, dans ce cas, seul le débordement de la valeur du champ C_{j,k} sur l'un des champs voisins de la structure Sⱼ est mis en oeuvre.

Ce qui a été décrit ici n'est pas nécessairement mis en oeuvre pour toutes les structures de données. Par exemple, pour certaines structures de données, la sécurisation est désactivée. Pour cela, l'identifiant IPSⱼ et les identifiants IC_{j,k} de chaque champ de cette structure de données sont nuls. L'activation et/ou la désactivation de la sécurisation de certaines structures de données sont par exemple programmées en ajoutant une instruction spécifique d'activation, et en alternance de désactivation, associée à cette structure de données dans le code source.

Dans d'autres modes de réalisation, la sécurisation des structures de données est uniquement mise en oeuvre pour des structures de données enregistrées dans une partie spécifique de la mémoire 4. Par exemple, la sécurisation des structures est uniquement mise en oeuvre pour les structures de données enregistrées dans la pile 46 ou le tas 48. Pour cela, le procédé de la figure 4 ou 5 est seulement mis en oeuvre dans le cas où la structure de données est enregistrées dans la pile 46 ou le tas 48. Le procédé de la figure 4 ou 5 peut aussi être mis en oeuvre seulement pour les structures de données enregistrées dans la partie 44 de la mémoire.

### Autres variantes :

D'autres modes de réalisation de l'appareil 1 sont possibles. En particulier, toutes les variantes décrites dans les paragraphes 191 à 194 de la demande EP3457620A1 sont applicables ici.

Le module 28 peut être remplacé par un module logiciel qui, lorsqu'il est exécuté par l'unité 10, réalise les mêmes fonctions et opérations que celles décrites pour le module 28.

Ce qui a été décrit ici s'applique aussi dans un contexte où aucun mécanisme de mémoire virtuelle n'est implémenté. Dans ce cas, aucune adresse virtuelle n'est utilisée et seule les adresses physiques sont utilisées.

Une ligne de donnée peut être plus longue qu'un mot-machine. Dans ce cas, chaque ligne de donnée se compose de plusieurs mots-machine généralement situés à des adresses mémoires immédiatement consécutives dans la mémoire 4. Dans ce cas, une ligne de donnée est chargée dans le microprocesseur 2 non pas en une seule opération de lecture, mais en exécutant plusieurs opérations de lecture. Chaque opération de lecture charge dans le microprocesseur un mot-machine respectif de la ligne de donnée.

Tous les modes de réalisation décrits dans ce texte et, en particulier, les différentes variantes, peuvent être combinés entre eux.

### CHAPITRE V : AVANTAGES DES MODES DE RÉALISATION DÉCRITS :

Les modes de réalisation décrits ici permettent de détecter tous les usages erronés d'un pointeur qui sont détectés à l'aide du procédé décrit dans la demande EP3761199A1. Par exemple, les procédés décrits ici permettent de détecter des attaques qui utilisent des pointeurs invalides, comme les « dangling pointers », et de détecter des attaques par dépassement de tampons comme les attaques du type « stack overflow attack » ou « stack underflow attack ». Par contre, contrairement au procédé de la demande EP3761199A1, les procédés décrits ici permettent en plus de détecter le débordement de la valeur d'un champ d'une structure de données sur les champs voisins de cette même structure de données. De plus, pour faire cela, les modes de réalisation décrits conservent la possibilités de ne définir explicitement qu'un seul pointeur PSⱼ de structure de données pour manipuler chacun des champs C_{j,k} de la structure Sⱼ. Ainsi, les fonctions qui lisent ou écrivent les champs C_{j,k} reçoivent en argument seulement le pointeur PSⱼ et non pas les pointeurs PC_{j,k}. Enfin, puisque l'identifiant IPC_{j,k} est construit à partir de l'identifiant IPSⱼ, cet identifiant IPC_{j,k} est propre à la structure Sⱼ. Dès lors le pointeur PC_{j,k} ne peut pas être utilisé pour lire un champ dans une autre structure de données même si sa définition est identique à celle de la structure Sⱼ.

Le fait que les plages P₁ et P₂ soient situées aux mêmes emplacements dans les pointeurs de structure de données et dans les pointeurs de champ, permet de construire le pointeur PC1_{k,n} vers en champ C1_{k,n} d'une structure S1ₖ de données de rang 1 en exécutant les mêmes opérations que celles exécutées pour construire le pointeur PC_{j,k} qui pointe directement vers cette structure S1ₖ. Cela facilite grandement la mise en oeuvre des procédés décrits dans le cas où la structure de données est imbriquée l'intérieur d'une ou plusieurs autres structures de données de rang inférieur. Ainsi, les procédés décrits permettent simplement de sécuriser les structures de données imbriquées les unes à l'intérieur des autres.

Le fait de déterminer l'identifiant IC_{j,k} à partir de la position du champ C_{j,k} dans la structure Sⱼ permet d'éviter l'usage d'une table associant, à chaque champ d'une structure de données, son identifiant. En effet, la position du champ C_{j,k} par rapport à l'adresse @Sⱼ où débute la structure Sⱼ se déduit de la déclaration du type du pointeur PSⱼ.

Le fait que l'identifiant IC_{j,0} soit nul simplifie la construction du pointeur PC_{j,0} car dans ce cas le pointeur PC_{j,0} est égal au pointeur PSⱼ.

La génération du pointeur PSⱼ en réponse à l'exécution d'une instruction d'allocation dynamique d'une zone de mémoire permet de mettre en oeuvre le procédé décrit dans le cas où la structure de données est enregistrée dans une zone de mémoire allouée dynamiquement au cours de l'exécution du code binaire.

Le fait que les tailles des pointeurs PSⱼ et PC_{j,k} soient égales à la taille d'une adresse permet de charger et de manipuler ces pointeurs enrichis comme une adresse classique et donc en un minimum d'instructions. En particulier, il n'est pas nécessaire d'ajouter des instructions supplémentaires pour lire ou écrire l'identifiant du pointeur dans la mémoire 4.

## Revendications

1. Procédé d'exécution d'un code binaire d'un programme d'ordinateur par un microprocesseur, ce code binaire définissant une structure de données comportant plusieurs champs accessibles indépendamment les uns des autres dont au moins un champ particulier à lire à l'aide d'un pointeur, ce procédé comportant les étapes suivantes :
a) l'écriture (150, 200), dans la mémoire principale, de la valeur du champ particulier associée à un premier identifiant de pointeur de champ, ce premier identifiant de pointeur de champ identifiant le pointeur de champ à utiliser pour lire la valeur de ce champ particulier, puis
b) la lecture (170) de la valeur de ce champ particulier de la structure de données à partir de la mémoire principale, cette étape de lecture comportant les opérations suivantes :
b1) l'obtention (172) d'un pointeur de structure de données qui pointe sur le début de la structure de données, ce pointeur de structure de données contenant :
- une première plage de bits contenant l'adresse à laquelle débute la structure de données dans l'espace d'adressage du programme d'ordinateur, et
- une seconde plage différente de bits contenant un identifiant de pointeur de structure de données, cet identifiant de pointeur de structure de données permettant d'identifier de façon unique ce pointeur de structure de données parmi un ensemble contenant plusieurs pointeurs différents de structure de données mis en oeuvre lors de la même exécution du code binaire par ce microprocesseur, puis
b2) la construction (174) d'un pointeur de champ qui pointe directement sur le champ particulier de la structure de données à lire, ce pointeur de champ contenant :
- une première plage de bits contenant l'adresse à laquelle débute le champ particulier dans l'espace d'adressage du programme d'ordinateur, et
- une seconde plage de bits contenant un second identifiant de pointeur de champ, cette opération de construction comportant les sous-opérations suivantes :
b2.1) la détermination de l'adresse à laquelle débute le champ particulier à partir de l'adresse contenue dans la première plage de bits du pointeur de structure de données et de la position du champ particulier par rapport au début de la structure de données, et
b2.2) la détermination du second identifiant de pointeur de champ à partir de l'identifiant de pointeur de structure de données contenu dans la seconde plage de bits du pointeur de structure de données obtenu lors de l'opération b1), puis
b3) le chargement (178), depuis la mémoire principale, de la valeur du champ particulier à l'aide de l'adresse contenue dans la première plage de bits du pointeur de champ construit lors de l'opération b2), puis
b4) la vérification (186; 386) que le second identifiant de champ contenu dans la seconde plage de bits du pointeur de champ construit lors de l'opération b2), correspond au premier identifiant de pointeur de champ associé à ce même champ particulier lors de l'écriture de cette valeur dans la mémoire principale, et lorsque les premier et second identifiants de pointeur de champ ne correspondent pas, le déclenchement (182) du signalement d'une faute d'exécution et, dans le cas contraire, l'inhibition du déclenchement du signalement d'une faute d'exécution et le traitement, par le microprocesseur, de la valeur chargée du champ particulier, dans lequel :
- lors de l'étape a), le premier identifiant de pointeur de champ associé au champ particulier est déterminé à partir de l'identifiant de pointeur de structure de données et à partir d'un identifiant du champ particulier différant pour tous les champs de la structure de données voisins du champ particulier à lire, et
- lors de l'opération b2), le second identifiant de pointeur de champ est en plus déterminé à partir du même identifiant du champ particulier pour obtenir un second identifiant de pointeur de champ qui correspond systématiquement au premier identifiant de pointeur de champ lorsque l'identifiant du pointeur de structure de données est identique à celui utilisé pour déterminer le premier identifiant de pointeur de champ.

2. Procédé selon la revendication 1, dans lequel :
- les structures du pointeur de structure de données et des pointeurs de champ sont identiques, et
- les emplacements des première et seconde plages de bits dans le pointeur de structure de données et dans les pointeurs de champ sont identiques.

3. Procédé selon la revendication 2, dans lequel :
- la structure de données, dite de rang supérieur, est imbriquée à l'intérieur d'une structure de données dite de rang inférieur, cette structure de données de rang supérieur correspondant à un premier champ particulier de la structure de données de rang inférieur et la structure de données de rang supérieur comportant un second champ particulier à lire à l'aide d'un pointeur,
- les opérations b1) et b2) sont exécutées une première fois pour la structure de données de rang inférieur et pour ce premier champ particulier pour obtenir un premier pointeur de champ qui pointe directement sur le début du premier champ, puis les opérations b1) et b2) sont exécutées une seconde fois pour la structure de données de rang supérieur et pour le second champ particulier pour obtenir un second pointeur de champ qui pointe directement sur le début du second champ,
- lors de la première exécution de l'opération b1), c'est le pointeur de structure de données qui pointe sur le début de la structure de données de rang inférieur qui est obtenu,
- lors de la première exécution de l'opération b2), c'est un premier identifiant du premier champ qui est utilisé pour construire le premier pointeur de champ,
- lors de la seconde exécution de l'opération b1) pour la structure de données de rang inférieur, le pointeur de structure de données obtenu est égal au premier pointeur de champ construit lors de la première exécution de l'opération b2),
- lors de la seconde exécution de l'opération b2), c'est un second identifiant du second champ qui est utilisé pour construire le second pointeur de champ, puis
- les opérations b3) et b4) sont exécutées en utilisant l'adresse et l'identifiant contenus, respectivement, dans les première et seconde plages de bits du second pointeur de champ construit lors de la seconde exécution de l'opération b2).

4. Procédé selon l'une quelconque des revendications précédentes, dans lequel la sous-opération b2.2) comporte la détermination du second identifiant de champ à partir de la position du champ particulier par rapport au début de la structure de données.

5. Procédé selon la revendication 4, dans lequel, lorsque le champ particulier est le premier champ de la structure de données, le second identifiant de ce champ particulier est systématiquement nul de sorte que l'identifiant de pointeur de champ construit (174) pour ce champ particulier est égal à l'identifiant de pointeur de structure de données contenu dans la seconde plage de bits du pointeur de structure de données.

6. Procédé selon l'une quelconque des revendications précédentes, dans lequel l'étape a) comporte les opérations suivantes :
a1) l'obtention (202) du pointeur de structure de données qui pointe sur le début de la structure de données, puis
a2) la détermination (204) du premier identifiant de pointeur de champ à partir :
- de l'identifiant du pointeur de structure de données contenu dans la seconde plage de bits du pointeur de structure de données obtenu lors de l'opération a1), et
- de l'identifiant du champ particulier, puis
a3) l'enregistrement (218), dans la mémoire principale, de la valeur du champ particulier associée au premier identifiant de pointeur de champ déterminé lors de l'opération a2).

7. Procédé selon la revendication 6, dans lequel l'opération a1) comporte :
- l'exécution, par le microprocesseur, d'une instruction d'allocation dynamique d'une zone de mémoire pour y enregistrer la structure de données, cette instruction d'allocation étant contenue dans le code binaire du programme d'ordinateur, puis
- en réponse :
- la réservation dans dans l'espace d'adressage du programme d'ordinateur, d'une zone de mémoire d'une taille égale à la taille de la structure de données, dans laquelle le microprocesseur peut écrire et lire les valeurs des champs de cette structure de données, et
- la génération du pointeur de structure de données qui contient, dans sa première plage de bits, l'adresse où débute la zone de mémoire réservée et dans sa seconde plage de bits l'identifiant de pointeur de structure de données.

8. Procédé selon la revendication 6 ou 7, dans lequel :
- l'étape a) comporte :
- la construction (216) d'un ou plusieurs cryptogrammes à partir de la valeur du champ particulier à écrire,
- le calcul (216) d'une ou plusieurs premières étiquettes permettant de vérifier l'intégrité de chacun des cryptogrammes construits, cette première étiquette étant calculée à partir du cryptogramme construit et à l'aide du premier identifiant de pointeur de champ pour former l'association entre ce champ particulier et ce premier identifiant de pointeur de champ, et
- l'enregistrement (218) dans la mémoire principale du ou des cryptogrammes construits et du ou des premières étiquettes calculées à des emplacements associés les uns aux autres,
- l'opération b3) comporte, pour chaque cryptogramme enregistré lors de l'étape a), le chargement (178), depuis la mémoire principale, de ce cryptogramme et de la première étiquette d'intégrité associée à ce cryptogramme, à l'aide de l'adresse contenue dans la première plage de bits du pointeur de champ construit lors de l'opération b2),
- l'opération b4), comporte la vérification (186) de l'intégrité de chaque cryptogramme chargé, cette vérification comportant :
- la construction d'une seconde étiquette d'intégrité à partir du cryptogramme chargé et de l'identifiant de pointeur de champ contenu dans la seconde plage de bits du pointeur de champ construit lors de l'opération b2), puis
- la comparaison de cette seconde étiquette d'intégrité à la première étiquette d'intégrité chargée, puis
- lorsque la seconde étiquette d'intégrité ne correspond pas à la première étiquette d'intégrité, c'est-à-dire que la vérification de l'intégrité du cryptogramme chargé échoue, le microprocesseur déclenche systématiquement le signalement d'une faute d'exécution, et lorsque la seconde étiquette d'intégrité correspond à la première étiquette d'intégrité, c'est-à-dire que le cryptogramme chargé est intègre, le cryptogramme chargé est déchiffré pour obtenir la valeur en clair du champ et le déclenchement d'une faute d'exécution est inhibé.

9. Procédé selon la revendication 6 ou 7, dans lequel :
- l'étape a) comporte l'enregistrement (318) dans la mémoire principale d'un ou plusieurs blocs de données chiffrées et authentifiées contenant la valeur du champ particulier, chaque bloc de données chiffrées et authentifiées contenant :
- un cryptogramme de l'ensemble des données de ce bloc, ce cryptogramme devant être déchiffré dans sa totalité pour obtenir un bloc de données en clair,
- un code d'authentification calculé à partir du cryptogramme du bloc de données en clair, et
- des métadonnées, ces métadonnées comportant le premier identifiant de pointeur de champ associé au champ particulier,
- l'opération b3) comporte le chargement, depuis la mémoire principale, de chaque bloc de données chiffrées et authentifiées contenant la valeur du champ particulier à l'aide de l'adresse contenue dans la première plage de bits du pointeur de champ construit lors de l'opération b2),
- l'opération b4) comporte, pour chaque bloc chargé lors de l'opération b3), la vérification (386) que le second identifiant de pointeur de champ contenu dans la seconde plage de bits du pointeur de champ construit lors de l'opération b2), correspond au premier identifiant de pointeur de champ associé à la valeur du champ particulier et contenu dans les métadonnées du bloc chargé, et lorsque les premier et second identifiants de pointeur de champ ne correspondent pas, le déclenchement (182) du signalement d'une faute d'exécution et, dans le cas contraire, l'inhibition du déclenchement du signalement d'une faute d'exécution et le traitement, par le microprocesseur, de la valeur chargée du champ particulier.

10. Procédé selon l'une quelconque des revendications précédentes, dans lequel les tailles du pointeur de structure de données et de chaque pointeur de champ, en nombre de bits, sont égales au nombre de bits maximal que peut contenir une adresse transférée du microprocesseur jusqu'à la mémoire principale par l'intermédiaire d'un bus d'adresse.

11. Code binaire d'un programme d'ordinateur apte à être exécuté par un microprocesseur, **caractérisé en ce que** ce code binaire comporte des instructions pour exécuter les étapes d'un procédé d'exécution conforme à l'une quelconque des revendications précédentes, lorsque ces instructions sont exécutées par un microprocesseur.

12. Support d'enregistrement d'informations, lisible par un microprocesseur, **caractérisé en ce que** ce support d'enregistrement d'informations comporte un code binaire conforme à la revendication 11.

13. Microprocesseur pour la mise en oeuvre d'un procédé conforme à l'une quelconque des revendications 1 à 10, ce microprocesseur étant apte à exécuter un code binaire d'un programme d'ordinateur, ce code binaire définissant une structure de données comportant plusieurs champs accessibles indépendamment les uns des autres dont au moins un champ particulier à lire à l'aide d'un pointeur, ce microprocesseur étant configuré pour exécuter les étapes suivantes :
a) l'écriture, dans la mémoire principale, de la valeur du champ particulier associée à un premier identifiant de pointeur de champ, ce premier identifiant de pointeur de champ identifiant le pointeur de champ à utiliser pour lire la valeur de ce champ particulier, puis
b) la lecture de la valeur de ce champ particulier de la structure de données à partir de la mémoire principale, cette étape de lecture comportant les opérations suivantes :
b1) l'obtention d'un pointeur de structure de données qui pointe sur le début de la structure de données, ce pointeur de structure de données contenant :
- une première plage de bits contenant l'adresse à laquelle débute la structure de données dans l'espace d'adressage du programme d'ordinateur, et
- une seconde plage différente de bits contenant un identifiant de pointeur de structure de données, cet identifiant de pointeur de structure de données permettant d'identifier de façon unique ce pointeur de structure de données parmi un ensemble contenant plusieurs pointeurs différents de structure de données mis en oeuvre lors de la même exécution du code binaire par ce microprocesseur, puis
b2) la construction d'un pointeur de champ qui pointe directement sur le champ particulier de la structure de données à lire, ce pointeur de champ contenant :
- une première plage de bits contenant l'adresse à laquelle débute le champ particulier dans l'espace d'adressage du programme d'ordinateur, et
- une seconde plage de bits contenant un second identifiant de pointeur de champ,
cette opération de construction comportant les sous-opérations suivantes :
b2.1) la détermination de l'adresse à laquelle débute le champ particulier à partir de l'adresse contenue dans la première plage de bits du pointeur de structure de données et de la position du champ particulier par rapport au début de la structure de données, et
b2.2) la détermination du second identifiant de pointeur de champ à partir de l'identifiant de pointeur de structure de données contenu dans la seconde plage de bits du pointeur de structure de données obtenu lors de l'opération b1), puis
b3) le chargement, depuis la mémoire principale, de la valeur du champ particulier à l'aide de l'adresse contenue dans la première plage de bits du pointeur de champ construit lors de l'opération b2), puis
b4) la vérification que le second identifiant de champ contenu dans la seconde plage de bits du pointeur de champ construit lors de l'opération b2), correspond au premier identifiant de pointeur de champ associé à ce même champ particulier lors de l'écriture de sa valeur dans la mémoire principale, et lorsque les premier et second identifiants de pointeur de champ ne correspondent pas, le déclenchement du signalement d'une faute d'exécution et, dans le cas contraire, l'inhibition du déclenchement du signalement d'une faute d'exécution et le traitement, par le microprocesseur, de la valeur chargée du champ particulier,
le microprocesseur étant également configuré pour :
- lors de l'étape a), le premier identifiant de pointeur de champ associé au champ particulier est déterminé à partir de l'identifiant de pointeur de structure de données et à partir d'un identifiant du champ particulier différant pour tous les champs de la structure de données voisins du champ particulier à lire, et
- lors de l'opération b2), le second identifiant de pointeur de champ est en plus déterminé à partir du même identifiant du champ particulier pour obtenir un second identifiant de pointeur de champ qui correspond systématiquement au premier identifiant de pointeur de champ lorsque l'identifiant du pointeur de structure de données est identique à celui utilisé pour déterminer le premier identifiant de pointeur de champ.

14. Microprocesseur selon la revendication 13, dans lequel le jeu d'instructions du microprocesseur comporte une instruction, qui lorsqu'elle est exécutée par une unité arithmétique est logique du microprocesseur, enregistre, dans la seconde plage de bits d'un pointeur, le résultat d'un "ou exclusif" entre les bits de cette seconde plage de bits et un identifiant de pointeur passé en opérande de cette instruction.

15. Compilateur (300) apte à transformer automatiquement un code source d'un programme d'ordinateur en un code binaire de ce programme d'ordinateur, ce code source définissant une structure de données comportant plusieurs champs accessibles indépendamment les uns des autres dont au moins un champ particulier à lire à l'aide d'un pointeur, **caractérisé en ce que** le compilateur est apte à transformer automatiquement le code source en un code binaire conforme à la revendication 11.

## Patentansprüche

1. Verfahren zur Ausführung eines Binärcodes eines Computerprogramms durch einen Mikroprozessor, wobei dieser Binärcode eine Datenstruktur definiert, die mehrere unabhängig voneinander zugängliche Felder aufweist, darunter mindestens ein mit Hilfe eines Zeigers zu lesendes bestimmtes Feld, wobei dieses Verfahren die folgenden Schritte aufweist:
a) das Schreiben (150, 200), in den Hauptspeicher, des Werts des einer ersten Feldzeigerkennung zugeordneten bestimmten Felds, wobei diese erste Feldzeigerkennung den Feldzeiger identifiziert, der zum Lesen des Werts dieses bestimmten Felds zu verwenden ist, dann
b) das Lesen (170) des Werts dieses bestimmten Felds der Datenstruktur ausgehend vom Hauptspeicher, wobei dieser Leseschritt die folgenden Operationen aufweist:
b1) das Erlangen (172) eines Datenstrukturzeigers, der auf den Anfang der Datenstruktur zeigt, wobei dieser Datenstrukturzeiger enthält:
- einen ersten Bitbereich, der die Adresse enthält, an der die Datenstruktur im Adressraum des Computerprogramms anfängt, und
- einen anderen zweiten Bitbereich, der eine Datenstrukturzeigerkennung enthält, wobei diese Datenstrukturzeigerkennung es ermöglicht, diesen Datenstrukturzeiger unter einer Einheit eindeutig zu identifizieren, die mehrere verschiedene Datenstrukturzeiger enthält, die bei der gleichen Ausführung des Binärcodes durch diesen Mikroprozessor eingesetzt werden, dann
b2) die Konstruktion (174) eines Feldzeigers, der direkt auf das zu lesende bestimmte Feld der Datenstruktur zeigt, wobei dieser Feldzeiger enthält:
- einen ersten Bitbereich, der die Adresse enthält, an der das bestimmte Feld im Adressraum des Computerprogramms anfängt, und
- einen eine zweite Feldzeigerkennung enthaltenden zweiten Bitbereich, wobei diese Konstruktionsoperation die folgenden Teiloperationen aufweist:
b2.1) die Bestimmung der Adresse, an der das bestimmte Feld anfängt, ausgehend von der im ersten Bitbereich des Datenstrukturzeigers enthaltenen Adresse und von der Position des bestimmten Felds bezüglich des Anfangs der Datenstruktur, und
b2.2) die Bestimmung der zweiten Feldzeigerkennung ausgehend von der Datenstrukturzeigerkennung, die im zweiten Bitbereich des bei der Operation b1) erlangten Datenstrukturzeigers enthalten ist, dann
b3) das Laden (178), ausgehend vom Hauptspeicher, des Werts des bestimmten Felds mit Hilfe der im ersten Bitbereich des bei der Operation b2) konstruierten Feldzeigers enthaltenen Adresse, dann
b4) die Überprüfung (186; 386), dass die im zweiten Bitbereich des bei der Operation b2) konstruierten Feldzeigers enthaltene zweite Feldkennung der ersten Feldzeigerkennung entspricht, die diesem gleichen bestimmten Feld beim Schreiben dieses Werts in den Hauptspeicher zugeordnet ist, und wenn die ersten und zweiten Feldzeigerkennungen nicht übereinstimmen, das Auslösen (182) der Signalisierung eines Ausführungsfehlers, und im gegenteiligen Fall das Verhindern des Auslösens der Signalisierung eines Ausführungsfehlers und die Verarbeitung, durch den Mikroprozessor, des geladenen Werts des bestimmten Felds,
wobei
- im Schritt a) die dem bestimmten Feld zugeordnete erste Feldzeigerkennung ausgehend von der Datenstrukturzeigerkennung und ausgehend von einer Kennung des bestimmten Felds bestimmt wird, die sich für alle dem zu lesenden bestimmten Feld benachbarten Felder der Datenstruktur unterscheidet, und
- bei der Operation b2) die zweite Feldzeigerkennung außerdem ausgehend von der gleichen Kennung des bestimmten Felds zum Erlangen einer zweiten Feldzeigerkennung bestimmt wird, die systematisch der ersten Feldzeigerkennung entspricht, wenn die Kennung des Datenstrukturzeigers gleich derjenigen ist, die verwendet wird, um die erste Feldzeigerkennung zu bestimmen.

2. Verfahren nach Anspruch 1, wobei:
- die Strukturen des Datenstrukturzeigers und der Feldzeiger gleich sind, und
- die Stellen der ersten und zweiten Bitbereiche im Datenstrukturzeiger und in den Feldzeigern gleich sind.

3. Verfahren nach Anspruch 2, wobei:
- die so genannte Datenstruktur von höherem Rang im Inneren einer so genannten Datenstruktur von niedrigerem Rang verschachtelt wird, wobei diese Datenstruktur von höherem Rang einem ersten bestimmten Feld der Datenstruktur niedrigeren Rangs entspricht und die Datenstruktur höheren Rangs ein zweites bestimmtes Feld aufweist, das mit Hilfe eines Zeigers zu lesen ist,
- die Operationen b1) und b2) ein erstes Mal für die Datenstruktur niedrigeren Rangs und für dieses erste bestimmte Feld ausgeführt werden, um einen ersten Feldzeiger zu erlangen, der direkt auf den Anfang des ersten Felds zeigt, dann die Operationen b1) und b2) ein zweites Mal für die Datenstruktur höheren Rangs und für das zweite bestimmte Feld ausgeführt werden, um einen zweiten Feldzeiger zu erlangen, der direkt auf den Anfang des zweiten Felds zeigt,
- bei der ersten Ausführung der Operation b1) es der Datenstrukturzeiger ist, der auf den Anfang der Datenstruktur niedrigeren Rangs zeigt, der erlangt wird,
- bei der ersten Ausführung der Operation b2) es eine erste Kennung des ersten Felds ist, die verwendet wird, um den ersten Feldzeiger zu konstruieren,
- bei der zweiten Ausführung der Operation b1) für die Datenstruktur niedrigeren Rangs der erlangte Datenstrukturzeiger gleich dem ersten Feldzeiger ist, der bei der ersten Ausführung der Operation b2) konstruiert wird,
- bei der zweiten Ausführung der Operation b2) es eine zweite Kennung des zweiten Felds ist, die verwendet wird, um den zweiten Feldzeiger zu konstruieren, dann
- die Operationen b3) und b4) unter Verwendung der Adresse und der Kennung ausgeführt werden, die in den ersten bzw. zweiten Bitbereichen des zweiten Feldzeigers enthalten sind, der bei der zweiten Ausführung der Operation b2) konstruiert wird.

4. Verfahren nach einem der vorhergehenden Ansprüche, wobei die Teiloperation b2.2) die Bestimmung der zweiten Feldkennung ausgehend von der Position des bestimmten Felds bezüglich des Anfangs der Datenstruktur aufweist.

5. Verfahren nach Anspruch 4, wobei, wenn das bestimmte Feld das erste Feld der Datenstruktur ist, die zweite Kennung dieses bestimmten Felds systematisch Null ist, so dass die für dieses bestimmte Feld konstruierte (174) Feldzeigerkennung gleich der Datenstrukturzeigerkennung ist, die im zweiten Bitbereich des Datenstrukturzeigers enthalten ist.

6. Verfahren nach einem der vorhergehenden Ansprüche, wobei der Schritt a) die folgenden Operationen aufweist:
a1) das Erlangen (202) des Datenstrukturzeigers, der auf den Anfang der Datenstruktur zeigt, dann
a2) die Bestimmung (204) der ersten Feldzeigerkennung ausgehend von:
- der Kennung des Datenstrukturzeigers, die im zweiten Bitbereich des Datenstrukturzeigers enthalten ist, der bei der Operation a1) erlangt wird, und
- der Kennung des bestimmten Felds, dann
a3) die Speicherung (218), im Hauptspeicher, des Werts des bestimmten Felds, das der ersten Feldzeigerkennung zugeordnet ist, die bei der Operation a2) bestimmt wird.

7. Verfahren nach Anspruch 6, wobei die Operation a1) aufweist:
- die Ausführung, durch den Mikroprozessor, einer dynamischen Zuweisungsanweisung eines Speicherbereichs, um dort die Datenstruktur zu speichern, wobei diese Zuweisungsanweisung im Binärcode des Computerprogramms enthalten ist, dann
- als Antwort :
- die Reservierung im Adressraum des Computerprogramms eines Speicherbereichs einer Größe gleich der Größe der Datenstruktur, in dem der Mikroprozessor die Werte der Felder dieser Datenstruktur schreiben und lesen kann, und
- die Generierung des Datenstrukturzeigers, der in seinem ersten Bitbereich die Adresse, an der der reservierte Speicherbereich anfängt, und in seinem zweiten Bitbereich die Datenstrukturzeigerkennung enthält.

8. Verfahren nach Anspruch 6 oder 7, wobei:
- der Schritt a) aufweist:
- die Konstruktion (216) eines oder mehrerer Kryptogramme ausgehend von dem Wert des zu schreibenden bestimmten Felds,
- die Berechnung (216) eines oder mehrerer erster Label, die es ermöglichen, die Integrität jedes der konstruierten Kryptogramme zu überprüfen, wobei dieses erste Label ausgehend von dem konstruierten Kryptogramm und mit Hilfe der ersten Feldzeigerkennung berechnet wird, um die Zuordnung zwischen diesem bestimmten Feld und dieser ersten Feldzeigerkennung zu bilden, und
- die Speicherung (218) im Hauptspeicher des oder der konstruierten Kryptogramme und des oder der berechneten ersten Label an einander zugeordneten Stellen,
- die Operation b3) für jedes im Schritt a) gespeicherte Kryptogramm das Laden (178), ausgehend vom Hauptspeicher, dieses Kryptogramms und des diesem Kryptogramm zugeordneten ersten Integritätslabels mit Hilfe der im ersten Bitbereich des bei der Operation b2) konstruierten Feldzeigers enthaltenen Adresse aufweist,
- die Operation b4) die Überprüfung (186) der Integrität jedes geladenen Kryptogramms aufweist, wobei diese Überprüfung aufweist:
- die Konstruktion eines zweiten Integritätslabels ausgehend vom geladenen Kryptogramm und von der im zweiten Bitbereich enthaltenen Feldzeigerkennung des bei der Operation b2) konstruierten Feldzeigers, dann
- der Vergleich dieses zweiten Integritätslabels mit dem geladenen ersten Integritätslabel, dann
- wenn das zweite Integritätslabel nicht dem ersten Integritätslabel entspricht, d.h. wenn die Überprüfung der Integrität des geladenen Kryptogramms fehlschlägt, der Mikroprozessor systematisch die Signalisierung eines Ausführungsfehlers auslöst, und wenn das zweite Integritätslabel dem ersten Integritätslabel entspricht, d.h. wenn das geladene Kryptogramm integer ist, das geladene Kryptogramm entschlüsselt wird, um den unverschlüsselten Wert des Felds zu erlangen, und das Auslösen eines Ausführungsfehlers verhindert wird.

9. Verfahren nach Anspruch 6 oder 7, wobei:
- der Schritt a) die Speicherung (318) im Hauptspeicher eines oder mehrerer Blöcke von verschlüsselten und authentifizierten Daten aufweist, die den Wert des bestimmten Felds enthalten, wobei jeder Block von verschlüsselten und authentifizierten Daten enthält:
- ein Kryptogramm der Gesamtheit der Daten dieses Blocks, wobei dieses Kryptogramm als Ganzes entschlüsselt werden muss, um einen Block von unverschlüsselten Daten zu erlangen,
- einen ausgehend vom Kryptogramm des Blocks von unverschlüsselten Daten berechneten Authentifizierungscode, und
- Metadaten, wobei diese Metadaten die dem bestimmten Feld zugeordnete erste Feldzeigerkennung aufweisen,
- die Operation b3) das Laden, ausgehend vom Hauptspeicher, jedes Blocks von verschlüsselten und authentifizierten Daten, die den Wert des bestimmten Felds enthalten, mit Hilfe der Adresse aufweist, die im ersten Bitbereich des Feldzeigers enthalten ist, der bei der Operation b2) konstruiert wird,
- die Operation b4) für jeden bei der Operation b3) geladenen Block die Überprüfung (386), dass die zweite Feldzeigerkennung, die im zweiten Bitbereich des Feldzeigers enthalten ist, der bei der Operation b2) konstruiert wird, der ersten Feldzeigerkennung entspricht, die dem Wert des bestimmten Felds zugeordnet und in den Metadaten des geladenen Blocks enthalten ist, und wenn die ersten und zweiten Feldzeigerkennungen nicht übereinstimmen, die Auslösung (182) der Signalisierung eines Ausführungsfehlers und im gegenteiligen Fall die Verhinderung der Auslösung der Signalisierung eines Ausführungsfehlers und die Verarbeitung, durch den Mikroprozessor, des geladenen Werts des bestimmten Felds aufweist.

10. Verfahren nach einem der vorhergehenden Ansprüche, wobei die Größen des Datenstrukturzeigers und jedes Feldzeigers, in Anzahl von Bits, gleich der maximalen Anzahl von Bits sind, die eine Adresse enthalten kann, die vom Mikroprozessor bis zum Hauptspeicher mittels eines Adressenbusses übertragen wird.

11. Binärcode eines Computerprogramms, das von einem Mikroprozessor ausgeführt werden kann, **dadurch gekennzeichnet, dass** der Binärcode Anweisungen aufweist, um die Schritte eines Ausführungsverfahrens gemäß einem der vorhergehenden Ansprüche auszuführen, wenn diese Anweisungen von einem Mikroprozessor ausgeführt werden.

12. Informationsspeicherträger, der von einem Mikroprozessor lesbar ist, **dadurch gekennzeichnet, dass** dieser Informationsspeicherträger einen Binärcode gemäß Anspruch 11 aufweist.

13. Mikroprozessor zur Durchführung eines Verfahrens gemäß einem der Ansprüche 1 bis 10, wobei dieser Mikroprozessor fähig ist, einen Binärcode eines Computerprogramms auszuführen, wobei dieser Binärcode eine Datenstruktur definiert, die mehrere unabhängig voneinander zugängliche Felder aufweist, darunter mindestens ein bestimmtes Feld, das mit Hilfe eines Zeigers zu lesen ist, wobei dieser Mikroprozessor konfiguriert ist, die folgenden Schritte auszuführen :
a) das Schreiben, in den Hauptspeicher, des Werts des einer ersten Feldzeigerkennung zugeordneten bestimmten Felds, wobei diese erste Feldzeigerkennung den Feldzeiger identifiziert, der zum Lesen des Werts dieses bestimmten Felds zu verwenden ist, dann
b) das Lesen des Werts dieses bestimmten Felds der Datenstruktur ausgehend vom Hauptspeicher, wobei dieser Leseschritt die folgenden Operationen aufweist:
b1) das Erlangen eines Datenstrukturzeigers, der auf den Anfang der Datenstruktur zeigt, wobei dieser Datenstrukturzeiger enthält:
- einen ersten Bitbereich, der die Adresse enthält, an der die Datenstruktur im Adressraum des Computerprogramms anfängt, und
- einen anderen zweiten Bitbereich, der eine Datenstrukturzeigerkennung enthält, wobei diese Datenstrukturzeigerkennung es ermöglicht, diesen Datenstrukturzeiger eindeutig unter einer mehrere verschiedene Datenstrukturzeiger enthaltenden Einheit zu identifizieren, die bei der gleichen Ausführung des Binärcodes durch diesen Mikroprozessor eingesetzt werden, dann
b2) die Konstruktion eines Feldzeigers, der direkt auf das bestimmte Feld der zu lesenden Datenstruktur zeigt, wobei dieser Feldzeiger enthält:
- einen ersten Bitbereich, der die Adresse enthält, an der das bestimmte Feld im Adressraum des Computerprogramms anfängt, und
- einen eine zweite Feldzeigerkennung enthaltenden zweiten Bitbereich, wobei diese Konstruktionsoperation die folgenden Teiloperationen aufweist:
b2.1) die Bestimmung der Adresse, an der das bestimmte Feld anfängt, ausgehend von der im ersten Bitbereich des Datenstrukturzeigers enthaltenen Adresse und von der Position des bestimmten Felds bezüglich des Anfangs der Datenstruktur, und
b2.2) die Bestimmung der zweiten Feldzeigerkennung ausgehend von der Datenstrukturzeigerkennung, die im zweiten Bitbereich des Datenstrukturzeigers enthalten ist, der bei der Operation b1) erlangt wird, dann
b3) das Laden, ausgehend vom Hauptspeicher, des Werts des bestimmten Felds mit Hilfe der im ersten Bitbereich des Feldzeigers enthaltenen Adresse, der bei der Operation b2) konstruiert wird, dann b4) die Überprüfung, dass die zweite Feldkennung, die im zweiten Bitbereich des Feldzeigers enthalten ist, der bei der Operation b2) konstruiert wird, der ersten Feldzeigerkennung entspricht, die diesem gleichen bestimmten Feld beim Schreiben seines Werts in den Hauptspeicher zugeordnet wird, und wenn die ersten und zweiten Feldzeigerkennungen nicht übereinstimmen, die Auslösung der Signalisierung eines Ausführungsfehlers, und im gegenteiligen Fall, die Verhinderung der Auslösung der Signalisierung eines Ausführungsfehlers und die Verarbeitung, durch den Mikroprozessor, des geladenen Werts des bestimmten Felds,
wobei der Mikroprozessor ebenfalls konfiguriert ist, um :
- im Schritt a) die dem bestimmten Feld zugeordnete erste Feldzeigerkennung ausgehend von der Datenstrukturzeigerkennung und ausgehend von einer Kennung des bestimmten Felds zu bestimmen, die für alle dem zu lesenden bestimmten Feld benachbarten Felder der Datenstruktur unterschiedlich ist, und
- bei der Operation b2) die zweite Feldzeigerkennung außerdem ausgehend von der gleichen Kennung des bestimmten Felds zu bestimmen, um eine zweite Feldzeigerkennung zu erlangen, die systematisch der ersten Feldzeigerkennung entspricht, wenn die Kennung des Datenstrukturzeigers gleich derjenigen ist, die verwendet wird, um die erste Feldzeigerkennung zu bestimmen.

14. Mikroprozessor nach Anspruch 13, wobei der Satz von Anweisungen des Mikroprozessors eine Anweisung aufweist, die, wenn sie von einer arithmetischen und logischen Einheit des Mikroprozessors ausgeführt wird, im zweiten Bitbereich eines Zeigers das Ergebnis eines "Exklusiv-Oder" zwischen den Bits dieses zweiten Bitbereichs und eine Zeigerkennung speichert, die zum Operand dieser Anweisung geworden ist.

15. Kompilierer (300), der fähig ist, automatisch einen Quellencode eines Computerprogramms in einen Binärcode dieses Computerprogramms umzuwandeln, wobei dieser Quellencode eine Datenstruktur definiert, die mehrere unabhängig voneinander zugängliche Feder aufweist, darunter mindestens ein mit Hilfe eines Zeigers zu lesendes bestimmtes Feld, **dadurch gekennzeichnet, dass** der Kompilierer fähig ist, den Quellencode automatisch in einen Binärcode gemäß Anspruch 11 umzuwandeln.

## Claims

1. Method for the execution of a binary code of a computer program by a microprocessor, this binary code defining a data structure comprising multiple fields able to be accessed independently of one another including at least one particular field to be read using a pointer, this method comprising the following steps:
a) writing (150, 200), to the main memory, the value of the particular field associated with a first field pointer identifier, this first field pointer identifier identifying the field pointer to be used to read the value of this particular field, and then
b) reading (170) the value of this particular field of the data structure from the main memory, this reading step comprising the following operations:
b1) obtaining (172) a data structure pointer that points to the start of the data structure, this data structure pointer containing:
- a first range of bits containing the starting address of the data structure in the address space of the computer program, and
- a second, different range of bits containing a data structure pointer identifier, this data structure pointer identifier making it possible to uniquely identify this data structure pointer among a set containing multiple different data structure pointers implemented in the same execution of the binary code by this microprocessor, and then
b2) constructing (174) a field pointer that points directly to the particular field of the data structure to be read, this field pointer containing:
- a first range of bits containing the starting address of the particular field in the address space of the computer program, and
- a second range of bits containing a second field pointer identifier,
this construction operation comprising the following sub-operations:
b2.1) determining the starting address of the particular field from the address contained in the first range of bits of the data structure pointer and the position of the particular field with respect to the start of the data structure, and
b2.2) determining the second field pointer identifier from the data structure pointer identifier contained in the second range of bits of the data structure pointer obtained in operation b1), and then
b3) loading (178), from the main memory, the value of the particular field using the address contained in the first range of bits of the field pointer constructed in operation b2), and then
b4) checking (186; 386) that the second field identifier contained in the second range of bits of the field pointer constructed in operation b2) corresponds to the first field pointer identifier associated with this same particular field when this value is written to the main memory, and when the first and second field pointer identifiers do not match, triggering (182) the signalling of an execution fault and, in the opposite case, suppressing the triggering of the signalling of an execution fault and processing, by way of the microprocessor, the loaded value of the particular field,
wherein:
- in step a), the first field pointer identifier associated with the particular field is determined from the data structure pointer identifier and from an identifier of the particular field that differs for all of the fields of the data structure that are adjacent to the particular field to be read, and
- in operation b2), the second field pointer identifier is additionally determined from the same identifier of the particular field in order to obtain a second field pointer identifier that systematically corresponds to the first field pointer identifier when the identifier of the data structure pointer is identical to the one used to determine the first field pointer identifier.

2. Method according to Claim 1, wherein:
- the structures of the data structure pointer and of the field pointers are identical, and
- the locations of the first and second ranges of bits in the data structure pointer and in the field pointers are identical.

3. Method according to Claim 2, wherein:
- the data structure said to be of higher rank is embedded within a data structure said to be of lower rank, this data structure of higher rank corresponding to a first particular field of the data structure of lower rank and the data structure of higher rank comprising a second particular field to be read using a pointer,
- operations b1) and b2) are executed a first time for the data structure of lower rank and for this first particular field in order to obtain a first field pointer that points directly to the start of the first field, and then operations b1) and b2) are executed a second time for the data structure of higher rank and for the second particular field in order to obtain a second field pointer that points directly to the start of the second field,
- in the first execution of operation b1), it is the data structure pointer that points to the start of the data structure of lower rank that is obtained,
- in the first execution of operation b2), it is a first identifier of the first field that is used to construct the first field pointer,
- in the second execution of operation b1) for the data structure of lower rank, the data structure pointer that is obtained is the same as the first field pointer constructed in the first execution of operation b2),
- in the second execution of operation b2), it is a second identifier of the second field that is used to construct the second field pointer, and then
- operations b3) and b4) are executed using the address and the identifier contained, respectively, in the first and second ranges of bits of the second field pointer constructed in the second execution of operation b2).

4. Method according to any one of the preceding claims, wherein sub-operation b2.2) comprises determining the second field identifier from the position of the particular field with respect to the start of the data structure.

5. Method according to Claim 4, wherein, when the particular field is the first field of the data structure, the second identifier of this particular field is systematically zero, such that the field pointer identifier constructed (174) for this particular field is the same as the data structure pointer identifier contained in the second range of bits of the data structure pointer.

6. Method according to any one of the preceding claims, wherein step a) comprises the following operations:
a1) obtaining (202) the data structure pointer that points to the start of the data structure, and then
a2) determining (204) the first field pointer identifier from:
- the identifier of the data structure pointer contained in the second range of bits of the data structure pointer obtained in operation a1), and
- the identifier of the particular field, and then
a3) storing (218), in the main memory, the value of the particular field associated with the first field pointer identifier determined in operation a2).

7. Method according to Claim 6, wherein operation a1) comprises:
- the microprocessor executing an instruction to dynamically allocate a memory area in order to store the data structure therein, this allocation instruction being contained in the binary code of the computer program, and then
- in response:
- reserving, in the address space of the computer program, a memory area of a size equal to the size of the data structure, to and from which the microprocessor is able to write and read the values of the fields of this data structure, and
- generating the data structure pointer that contains, in its first range of bits, the starting address of the reserved memory area and, in its second range of bits, the data structure pointer identifier.

8. Method according to Claim 6 or 7, wherein:
- step a) comprises:
- constructing (216) one or more cryptograms from the value of the particular field to be written,
- computing (216) one or more first tags for checking the integrity of each of the constructed cryptograms, this first tag being computed from the constructed cryptogram and using the first field pointer identifier in order to form the association between this particular field and this first field pointer identifier, and
- storing (218), in the main memory, the one or more constructed cryptograms and the one or more computed tags at locations associated with one another,
- operation b3) comprises, for each cryptogram stored in step a), loading (178) this cryptogram and the first integrity tag associated with this cryptogram from the main memory using the address contained in the first range of bits of the field pointer constructed in operation b2),
- operation b4) comprises checking (186) the integrity of each loaded cryptogram, this check comprising:
- constructing a second integrity tag from the loaded cryptogram and the field pointer identifier contained in the second range of bits of the field pointer constructed in operation b2), and then
- comparing this second integrity tag with the loaded first integrity tag, and then
- when the second integrity tag does not correspond to the first integrity tag, that is to say that the check on the integrity of the loaded cryptogram fails, the microprocessor systematically triggers the signalling of an execution fault, and when the second integrity tag corresponds to the first integrity tag, that is to say that the loaded cryptogram exhibits integrity, the loaded cryptogram is decrypted in order to obtain the cleartext value of the field and the triggering of an execution fault is suppressed.

9. Method according to Claim 6 or 7, wherein:
- step a) comprises storing (318), in the main memory, one or more blocks of encrypted and authenticated data containing the value of the particular field, each block of encrypted and authenticated data containing:
- a cryptogram of all of the data of this block, this cryptogram having to be decrypted in its entirety to obtain a block of cleartext data,
- an authentication code computed from the cryptogram of the block of cleartext data, and
- metadata, these metadata comprising the first field pointer identifier associated with the particular field,
- operation b3) comprises loading, from the main memory, each block of encrypted and authenticated data containing the value of the particular field using the address contained in the first range of bits of the field pointer constructed in operation b2),
- operation b4) comprises, for each block loaded in operation b3), checking (386) that the second field pointer identifier contained in the second range of bits of the field pointer constructed in operation b2) corresponds to the first field pointer identifier associated with the value of the particular field and contained in the metadata of the loaded block, and when the first and second field pointer identifiers do not match, triggering (182) the signalling of an execution fault and, in the opposite case, suppressing the triggering of the signalling of an execution fault and processing, by way of the microprocessor, the loaded value of the particular field.

10. Method according to any one of the preceding claims, wherein the sizes of the data structure pointer and of each field pointer, in number of bits, are equal to the maximum number of bits able to be contained by an address transferred from the microprocessor to the main memory by way of an address bus.

11. Binary code of a computer program able to be executed by a microprocessor, **characterized in that** this binary code comprises instructions for executing the steps of an execution method according to any one of the preceding claims when these instructions are executed by a microprocessor.

12. Information recording medium able to be read by a microprocessor, **characterized in that** this information recording medium contains a binary code according to Claim 11.

13. Microprocessor for implementing a method according to any one of Claims 1 to 10, this microprocessor being able to execute a binary code of a computer program, this binary code defining a data structure comprising multiple fields able to be accessed independently of one another including at least one particular field to be read using a pointer, this microprocessor being configured so as to execute the following steps:
a) writing, to the main memory, the value of the particular field associated with a first field pointer identifier, this first field pointer identifier identifying the field pointer to be used to read the value of this particular field, and then
b) reading the value of this particular field of the data structure from the main memory, this reading step comprising the following operations:
b1) obtaining a data structure pointer that points to the start of the data structure, this data structure pointer containing:
- a first range of bits containing the starting address of the data structure in the address space of the computer program, and
- a second, different range of bits containing a data structure pointer identifier, this data structure pointer identifier making it possible to uniquely identify this data structure pointer among a set containing multiple different data structure pointers implemented in the same execution of the binary code by this microprocessor, and then
b2) constructing a field pointer that points directly to the particular field of the data structure to be read, this field pointer containing:
- a first range of bits containing the starting address of the particular field in the address space of the computer program, and
- a second range of bits containing a second field pointer identifier,
this construction operation comprising the following sub-operations:
b2.1) determining the starting address of the particular field from the address contained in the first range of bits of the data structure pointer and the position of the particular field with respect to the start of the data structure, and
b2.2) determining the second field pointer identifier from the data structure pointer identifier contained in the second range of bits of the data structure pointer obtained in operation b1), and then
b3) loading, from the main memory, the value of the particular field using the address contained in the first range of bits of the field pointer constructed in operation b2), and then
b4) checking that the second field identifier contained in the second range of bits of the field pointer constructed in operation b2) corresponds to the first field pointer identifier associated with this same particular field when its value is written to the main memory, and when the first and second field pointer identifiers do not match, triggering the signalling of an execution fault and, in the opposite case, suppressing the triggering of the signalling of an execution fault and processing, by way of the microprocessor, the loaded value of the particular field,
the microprocessor also being configured such that:
- in step a), the first field pointer identifier associated with the particular field is determined from the data structure pointer identifier and from an identifier of the particular field that differs for all of the fields of the data structure that are adjacent to the particular field to be read, and
- in operation b2), the second field pointer identifier is additionally determined from the same identifier of the particular field in order to obtain a second field pointer identifier that systematically corresponds to the first field pointer identifier when the identifier of the data structure pointer is identical to the one used to determine the first field pointer identifier.

14. Microprocessor according to Claim 13, wherein the set of instructions of the microprocessor contains an instruction that, when it is executed by an arithmetic and logic unit of the microprocessor, stores, in the second range of bits of a pointer, the result of an "exclusive or" between the bits of this second range of bits and a pointer identifier passed as operand of this instruction.

15. Compiler (300) able to automatically transform a source code of a computer program into a binary code of this computer program, this source code defining a data structure comprising multiple fields able to be accessed independently of one another including at least one particular field to be read using a pointer, **characterized in that** the compiler is able to automatically transform the source code into a binary code according to Claim 11.
